# EUROPEAN PATENT SPECIFICATION

(11) **EP 4 145 747 B1**
(45) Date of publication and mention of the grant of the patent: **02.09.2026**
(21) Application number: 21811758.8
(22) Date of filing: 10.05.2021
(51) Int. Cl.: H04L 5/00, H04W 4/46

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 27.05.2020 CN 202010462497
(43) Date of publication of application: 08.03.2023
(73) Proprietor: Huawei Technologies Co., Ltd., Shenzhen, Guangdong 518129 (CN)
(72) Inventor: JIAO, Chunxu, Shenzhen, Guangdong 518129 (CN); XIANG, Zhengzheng, Shenzhen, Guangdong 518129 (CN); LU, Lei, Shenzhen, Guangdong 518129 (CN)
(74) Representative: Thun, Clemens
(86) International application number: PCT/CN2021/092746
(87) International publication number: WO 2021/238635

(56) References cited:
- WO-A1-2019/097478
- WO-A1-2020/029288
- CN-A- 109 981 155
- CN-A- 110 034 798
- CN-A- 110 149 612
- CN-A- 110 418 357
- CN-A- 110 996 395

## Description

### CROSS-REFERENCE TO RELATED APPLICATIONS

### TECHNICAL FIELD

This application relates to the field of communications technologies, and in particular, to a communication method and an apparatus.

### BACKGROUND

With further evolution of a multiple-input multiple-output (multiple-input multiple-output, MIMO) technology, technologies such as multiple-transmission and reception point (multiple-transmission and reception point, Multi-TRP), multiple-panel (multiple-panel, Multi-panel), and multiple-beam (multiple-beam, Multi-beam) are proposed in a Uu air interface of new radio (new radio, NR).

When the foregoing MIMO technology is used, a receiving end needs to be capable of distinguishing between signals sent by different TRPs, panels, or beams. Therefore, two important concepts are used in NR: quasi co-located (quasi co-located, QCL) and a transmission configuration indication (transmission configuration indication, TCI). In NR, the TCI indicates a QCL relationship between two reference signals (reference signals, RSs).

In an NR system, in addition to the Uu air interface, there is a PC5 interface. The PC5 interface is a communication interface between terminal apparatuses. A transmission link in the PC5 interface is defined as a sidelink (sidelink, SL). However, currently, there is still a lack of a method of indicating an SL TCI identifier. This hinders use of the MIMO technologies such as the multiple-panel and the multiple-beam in the PC5 interface.
The document WO 2019/097478 A1 shows a system and method for configuring spatial QCL reference in a TCI state. Especially, the setup of a side link connection is shown.
The document WO 2020/029288 A1 shows a system and method for quasi-colocation indication for non-zero power channel state information reference signal port groups. Also this document deals with the setup of a side link communication channel.

### SUMMARY

The present invention is defined by the independent claims. Further advantageous features are shown by the dependent claims.

Embodiments of this application provide a communication method and an apparatus, to indicate an SL TCI identifier.

### BRIEF DESCRIPTION OF DRAWINGS

FIG. 1 is a schematic diagram of a basic architecture of a multi-TRP technology according to an embodiment of this application;
FIG. 2 is a schematic diagram of multiple-panel according to an embodiment of this application;
FIG. 3 is a schematic diagram of a multiple-beam technology according to an embodiment of this application;
FIG. 4 is a schematic diagram of a QCL relationship according to an embodiment of this application;
FIG. 5 is a schematic diagram of a network architecture according to an embodiment of this application;
FIG. 6 is a schematic diagram of an application scenario according to an embodiment of this application;
FIG. 7 is a schematic flowchart of a communication method according to an embodiment of this application;
FIG. 8 is a schematic flowchart of a communication method according to an embodiment of this application;
FIG. 9 is a schematic flowchart of a communication method according to an embodiment of this application;
FIG. 10 is a schematic flowchart of panel selection according to an embodiment of this application;
FIG. 11 is a schematic flowchart of panel selection according to an embodiment of this application;
FIG. 12 is a schematic flowchart of a communication method according to an embodiment of this application;
FIG. 13 is a schematic flowchart of panel selection according to an embodiment of this application;
FIG. 14 is a schematic diagram of a structure of an apparatus according to an embodiment of this application; and
FIG. 15 is a schematic diagram of a structure of an apparatus according to an embodiment of this application.

### DESCRIPTION OF EMBODIMENTS

The following explains and describes some communication nouns or terms used in the embodiments of this application. The communication nouns or terms are also used as a part of invention content of this application.

### 1. Terminal apparatus

The terminal apparatus may be referred to as a terminal for short, and is a device having a wireless transceiver function. The terminal apparatus may be deployed on land, where the deployment includes indoor or outdoor, or handheld or vehicle-mounted deployment, may be deployed on water (for example, on a ship), or may be deployed in air (for example, on aircraft, a balloon, or a satellite). The terminal apparatus may be a mobile phone (mobile phone), a tablet computer (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in telemedicine (telemedicine), a wireless terminal device in a smart grid (smart grid), a wireless terminal device in transportation safety (transportation safety), a wireless terminal device in a smart city (smart city), or a wireless terminal device in a smart home (smart home), or may alternatively include user equipment (user equipment, UE) or the like. Alternatively, the terminal apparatus may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5th generation (5th generation, 5G) network, a terminal device in a future evolved public land mobile network (public land mobile network, PLMN), or the like. The terminal apparatus sometimes may also be referred to as a terminal, an access terminal device, a vehicle-mounted terminal device, an industrial control terminal device, a UE unit, a UE station, a mobile station, a mobile console, a remote station, a remote terminal device, a mobile device, a UE terminal device, a terminal device, a wireless communication device, a UE agent, a UE apparatus, or the like. The terminal apparatus may alternatively be fixed or mobile. This is not limited in embodiments of this application.

In embodiments of this application, an apparatus configured to implement a function of the terminal may be a terminal, or may be an apparatus, for example, a chip system, that can support the terminal in implementing this function. The apparatus may be mounted in the terminal. In embodiments of this application, the chip system may include a chip, or may include a chip and another discrete component. In the technical solutions provided in embodiments of this application, the technical solutions provided in embodiments of this application are described by using an example in which the apparatus for implementing the terminal function is a terminal and the terminal is UE.

### 2. Sidelink (sidelink, SL)

The sidelink may also be referred to as a sidelink, a sidelink, or the like. A communication interface of the sidelink may be referred to as a PC5 interface. The sidelink is used for communication between terminal apparatuses, and may include a physical sidelink shared channel (physical sidelink shared channel, PSSCH) and a physical sidelink control channel (physical sidelink control channel, PSCCH). The PSSCH may carry sidelink data (SL data), the PSCCH may carry sidelink control information (sidelink control information, SCI), and the SCI may also be referred to as a sidelink scheduling assignment (sidelink scheduling assignment, SL SA). The SL SA is information related to data scheduling. For example, the SL SA includes information such as resource allocation and/or a modulation and coding scheme (modulation and coding scheme, MCS) of the PSSCH. Optionally, sidelink communication may further include a physical sidelink feedback channel (physical sidelink feedback channel, PSFCH). The physical sidelink feedback channel may also be referred to as a sidelink feedback channel for short. The sidelink feedback channel may be for transmitting sidelink feedback control information (sidelink feedback control information, SFCI), and the sidelink feedback control information may include at least one of channel state information (channel state information, CSI), hybrid automatic repeat request (hybrid automatic repeat request, HARQ) information, and the like. The HARQ information may include acknowledgement information (acknowledgement, ACK), a negative acknowledgement (negative acknowledgement, NACK), or the like.

### 3. Uu air interface

The Uu air interface may be understood as a universal interface (universal UE to network interface) between a terminal apparatus and a network device, and the Uu air interface is used for communication between the terminal apparatus and the network apparatus. Transmission over the Uu air interface may include uplink transmission and downlink transmission.

The uplink transmission means that the terminal apparatus sends information to the network apparatus, and the information in the uplink transmission may be referred to as uplink information or an uplink signal. The uplink information or the uplink signal may include one or more of an uplink data signal, an uplink control signal, and a sounding reference signal (sounding reference signal, SRS). A channel for transmitting the uplink information or the uplink signal is referred to as an uplink channel, and the uplink channel may include one or more of a physical uplink data channel (physical uplink shared channel, PUSCH) and a physical uplink control channel (physical uplink control channel, PUCCH). The PUSCH carries uplink data, and the uplink data may also be referred to as uplink data information. The PUCCH carries uplink control information (uplink control information, UCI) fed back by the terminal apparatus. For example, the UCI may include one or more of channel state information (channel state information, CSI), an ACK, a NACK, and the like that are fed back by the terminal apparatus.

The downlink transmission means that the network apparatus sends information to the terminal apparatus, and the information in the downlink transmission may be downlink information or a downlink signal. The downlink information or the downlink signal may include one or more of a downlink data signal, a downlink control signal, a channel state information reference signal (channel state information reference signal, CSI-RS), and a phase-tracking reference signal (phase-tracking reference signal, PTRS). A channel for transmitting the downlink information or the downlink signal is referred to as a downlink channel, and the downlink channel may include one or more of a physical downlink data channel (physical downlink shared channel, PDSCH) and a physical downlink control channel (physical downlink control channel, PDCCH). The PDCCH carries downlink control information (downlink control information, DCI), and the PDSCH carries downlink data (data). The downlink data may also be referred to as downlink data information.

### 4. SL CSI-RS pattern

The SL CSI-RS pattern in embodiments of this application may be similar to a CSI-RS resource in a Uu air interface. One SL CSI-RS pattern corresponds to one SL CSI-RS configuration. A configuration parameter may be a quantity of ports, a frequency domain position, a time domain position, or the like. This is not limited.

In embodiments of this application, one or more SL CSI-RS patterns may be configured for a first terminal apparatus and a second terminal device. SL CSI-RSs sent by different panels, transmission beams, or antennas may correspond to a same pattern or different patterns.

### 5. Beam

The beam may be embodied as a spatial domain filter (spatial domain filter) in a protocol, or referred to as a spatial filter (spatial filter), a spatial parameter (spatial parameter), or the like. A beam used to send a signal may be referred to as a transmission beam (transmission beam, Tx beam), a spatial domain transmission filter (spatial domain transmission filter), a spatial transmission parameter (spatial transmission parameter), or the like. A beam used to receive a signal may be referred to as a reception beam (reception beam, Rx beam), a spatial domain receive filter (spatial domain receive filter), a spatial reception parameter (spatial RX parameter), or the like.

The transmission beam may refer to distribution of signal strength formed in different directions in space after a signal is transmitted through an antenna, and the reception beam may refer to distribution of signal strength, in different directions in space, of a radio signal received from an antenna.

In addition, the beam may be a wide beam, a narrow beam, a beam of another type, or the like. A technology for forming the beam may be a beamforming technology or another technology. This is not limited. For example, the beamforming technology may be specifically a digital beamforming technology, an analog beamforming technology, or a hybrid digital/analog beamforming technology.

Optionally, a plurality of beams having a same communication feature or similar communication features may be considered as one beam. One beam may include one or more antenna ports, configured to transmit a data channel, a control channel, a sounding signal, and the like. The one or more antenna ports forming the beam may also be considered as one antenna port set.

The beam usually corresponds to a resource. For example, when beam measurement is performed, a transmitting end measures different beams by using different resources, and a receiving end feeds back measured resource quality, so that the transmitting end can determine quality of a corresponding beam. In the embodiments of this application, unless otherwise specified, the beam is a transmission beam of the transmitting end. During beam measurement, each beam corresponds to one resource. Therefore, an index of the resource may be used to uniquely identify a beam corresponding to the resource.

In the descriptions of this application, "/" indicates an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

In the past few decades, a wireless communication system has undergone technical evolution from first-generation analog communication to fifth-generation new radio (new radio, NR). With the evolution, resources used in the wireless communication system gradually develop from two dimensions, namely, time domain and frequency domain, to three dimensions, namely, time domain, frequency domain, and space domain. Use of a space domain resource stems from development of a multiple-input multiple-output (multiple-input multiple-output, MIMO) system. In the MIMO system, a transmitting end may send data by using a plurality of antennas, and a receiving end may also receive data by using a plurality of antennas, to implement parallel transmission of a plurality of spatial data flows between the transmitting end and the receiving end, so as to improve a communication speed and communication reliability. With further evolution of the MIMO technology, technologies such as multiple-transmission and reception point (multiple-transmission and reception point, Multi-TRP), multiple-panel (multiple-panel, Multi-panel), and multiple-beam (multiple-beam, Multi-beam) are proposed in a Uu air interface of NR, and are considered as an important direction of technical development.

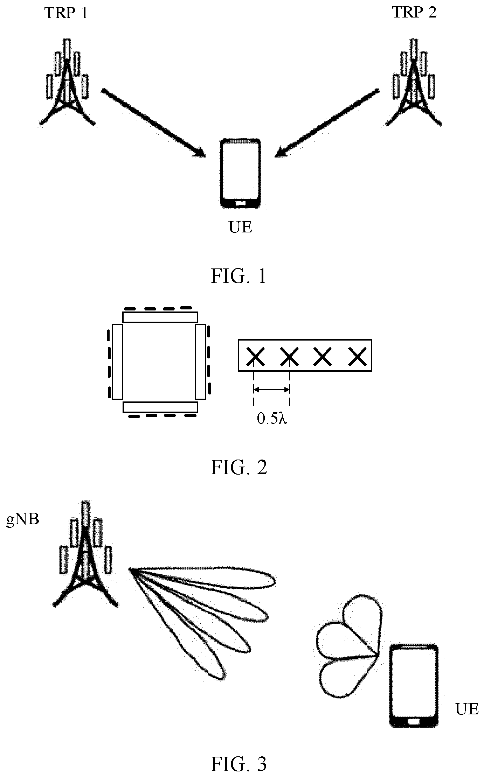

A basic architecture of the multi-TRP technology is shown in FIG. 1. A plurality of transmission reception points (transmission reception points, TRPs) may simultaneously transmit data to one terminal apparatus (for example, UE), to improve a communication rate and reliability. A possible implementation of the TRP is a 5G base station.

The multiple-panel technology enables a plurality of panels (panels) to exist on a terminal apparatus side and a network apparatus side, and one or more antennas are mounted on each panel. On the network apparatus side, use of the plurality of panels can avoid an overhead problem and a power consumption problem during deployment of a massive MIMO system. On the terminal device side, because the panel is generally directional, more spatial directions can be covered by using the plurality of panels, so that communication reliability is improved. As shown in FIG. 2, a top view of four panels is on the left side, and a horizontal view of a single panel is on the right side. As shown on the right side of FIG. 2, four dual-polarized antennas may be mounted on the single panel, and a horizontal distance between every two dual-polarized antennas is 0.5*λ*. *λ* represents a wavelength of a signal. When a terminal apparatus uses four panels, the terminal apparatus may send data in different directions, or may receive data from different directions.

The multiple-beam technology is generally applied to a high frequency band above 20 GHz. A beamforming (beamforming) technology enables a network apparatus, a terminal apparatus, and the like to form beams (beams) in one or more spatial directions, so that a communication rate and reliability are improved through sending and receiving in the directions. As shown in FIG. 3, a network apparatus may transmit data to a terminal apparatus by using transmission beams in different directions, and the terminal apparatus may receive data by using reception beams in different directions.

When the foregoing MIMO technology is used, a receiving end needs to be capable of distinguishing between signals sent by different TRPs, panels, or beams. Therefore, two important concepts are used in NR: quasi co-located (quasi co-located, QCL) and a transmission configuration indication (transmission configuration indication, TCI).

Before a definition of the QCL is provided, an antenna port (antenna port) needs to be explained first. The antenna port is a logical concept widely used in the 3rd generation partnership project (3rd generation partnership project, 3GPP), and is defined as follows: A channel feature experienced by a signal on an antenna port may be derived from a channel feature experienced by another signal transmitted on the same antenna port. It should be noted that the antenna port is different from an actually used physical antenna. A plurality of physical antennas may correspond to a same antenna port, and one physical antenna may alternatively correspond to a plurality of antenna ports.

Based on the antenna port, the QCL is defined as follows: A channel feature experienced by a signal on an antenna port may be derived from a channel feature experienced by a signal on another antenna port, and it is considered that the two antenna ports are QCL. In addition, there is also a QCL relationship between reference signals (reference signals, RSs) transmitted on the two antenna ports. For example, if an antenna port 1 and an antenna port 2 are QCL, the antenna port 1 is for transmitting a first RS, and the antenna port 2 is for transmitting a second RS, it may be considered that there is also a QCL relationship between the first RS and the second RS.

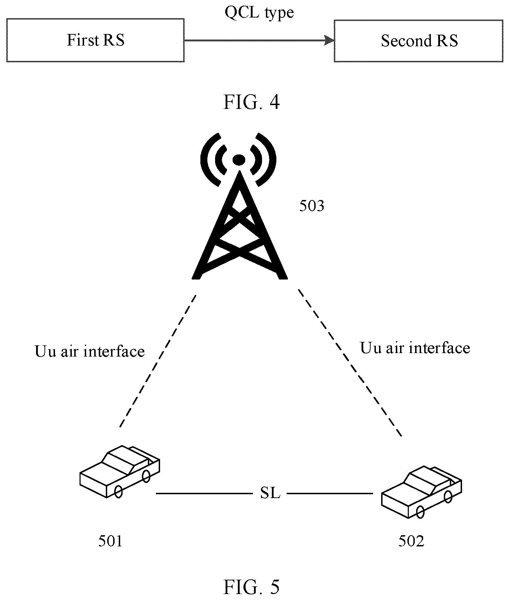

In NR, a TCI is used to indicate a QCL relationship between two RSs. It is assumed that the two RSs are respectively a first RS and a second RS. A network apparatus may configure a TCI-state (TCI-state) for the first RS by using radio resource control (radio resource control, RRC) signaling. As shown in FIG. 4, a terminal apparatus may determine, by using a TCI-state, a second RS that has a QCL relationship with a first RS based on a QCL type. Then, the terminal apparatus may derive a channel feature of the first RS by using a channel feature of the second RS, to better receive the first RS. Optionally, the second RS may be a channel state information reference signal (channel state information reference signal, CSI-RS), a synchronization signal block (synchronization signal block, SSB), or the like.

In an NR system, in addition to the Uu air interface, there is a PC5 interface. The PC5 interface is a communication interface between terminal apparatuses. A transmission link in the PC5 interface is a sidelink. However, currently, there is still a lack of a method of configuring and indicating an SL TCI identifier in the standard. This hinders use of the MIMO technologies such as the multiple-panel and the multiple-beam in the PC5 interface.

In the following descriptions, an example in which a network apparatus is a gNB and a terminal apparatus is UE is used to describe in detail a method of configuring and indicating a TCI in a Uu air interface, and a problem existing when the method of configuring and indicating the TCI in the Uu air interface is directly applied to a PC5 interface.

In the Uu air interface, the gNB may configure a plurality of TCI-states for the UE by using RRC signaling, and then indicate a TCI-state of an RS by using a media access control (media access control, MAC) control element (control element, CE) or downlink control information (downlink control information, DCI).

In the Uu air interface, an information element (information element, IE) of the TCI-state that is configured by using the RRC signaling may include at least one of the following information elements:
1. TCI-state identifier (tci-StateId): The TCI-state identifier provides an identifier (identification, ID) of the TCI-state.
2. Type-1 qcl (qcl-Type1): The type-1 qcl provides a QCL relationship and a corresponding RS, where the qcl-Type1 continues to point to a QCL-Info information element, and the QCL-Info information element provides a specific parameter of the QCL type.
3. Type-2 qcl (qcl-Type2): The type-2 qcl provides another QCL relationship and a corresponding RS, where the qcl-Type2 continues to point to a QCL-Info information element, and the QCL-Info information element provides a specific parameter of the QCL type.

The QCL-Info information element further includes the following two mandatory information elements, which are explained as follows:
1. Reference signal (referenceSignal): The reference signal provides an RS corresponding to a QCL relationship, where the RS may be a CSI-RS resource with an ID, or an SSB with a number (index). It should be noted that a CSI-RS may be represented as a CSI-RS resource, one CSI-RS resource corresponds to one CSI-RS configuration, a CSI-RS configuration parameter may include parameters such as a resource ID and a resource mapping, and the resource mapping parameter may further include a quantity of ports, a frequency domain position, a time domain position, and the like.
2. qcl-type (qcl-Type): The qcl-type provides a QCL type corresponding to a QCL relationship, where the QCL type may be any one of {type A, type B, type C, type D}.

A single QCL type corresponds to a combination of one or more channel features, and a possible channel feature includes a Doppler frequency shift, a Doppler spread, an average delay, a delay spread, a spatial reception parameter, and the like. A channel feature combination corresponding to each QCL type is briefly described as follows: a type A: {Doppler shift, Doppler spread, average delay, delay spread}; a type B: {Doppler shift, Doppler spread}; a type C: {Doppler shift, average delay}; and a type D: {spatial reception parameter}.

When there is a QCL relationship between two antenna ports based on a QCL type, it is considered that channel features experienced by signals on the two antenna ports are the same as a channel feature corresponding to the QCL type. The type D is used as an example. The QCL type corresponds to only a spatial reception parameter. Therefore, when there is a QCL relationship between two antenna ports based on the type D, it is considered that channels experienced by signals on the two antenna ports have a same spatial reception parameter.

It can be learned from the foregoing that four QCL types are considered in the Uu air interface, so that the UE can determine QCL types of RSs at a plurality of transmitting ends in a scenario of a plurality of sending devices such as an inter-gNodeB handover and multi-TRP. However, for SL scenarios such as vehicle-to-everything V2X communication and device-to-device D2D communication, a scenario of a plurality of transmitting end UEs may be simply decomposed into a plurality of unicast (unicast) links including only single transmitting end UE and single receiving end UE. Each unicast link is distinguished by using IDs of the transmitting end UE and the receiving end UE. Therefore, in the SL scenario, only a QCL relationship between RSs on the unicast link needs to be concerned. Therefore, a TCI definition needs to be simplified in the PC5 interface, to reduce signaling overheads of configuring and indicating the TCI-state.

Based on the foregoing descriptions, an SL TCI identifier is redefined in embodiments of this application, and the SL TCI identifier is defined as an identifier (ID) of a channel feature experienced by a signal on an antenna port on an SL. UE may consider that signals with the same SL TCI identifier experience the same channel feature. Optionally, the channel feature may be a spatial reception parameter. In other words, only one QCL type, namely, the type D (type D) in the Uu air interface is considered for the SL TCI identifier. For example, if an SL TCI identifier of a PSSCH demodulation reference signal (demodulation reference signal, DMRS) is 0, and an SL TCI identifier of a sidelink channel state information reference signal (sidelink channel state information reference signal, SL CSI-RS) is also 0, the UE may consider that spatial reception parameters experienced by the PSSCH DMRS and the SL CSI-RS are the same. If the spatial reception parameters are the same, it may be considered that the PSSCH DMRS and the SL CSI-RS are sent by using a same panel or beam. It should be noted that the name of the SL TCI identifier may also be replaced with a QCL identifier (QCL ID), a QCL number (QCL index), or the like. This is not limited.

In embodiments of this application, the definition of the SL TCI identifier is simplified, so that signaling overheads required to configure and indicate the TCI are reduced compared with those in the Uu air interface. Therefore, a technical problem that a configuration and indication method is excessively complex because there are excessively many QCL types in the Uu air interface is resolved.

Optionally, a value range of any SL TCI identifier in embodiments of this application may be an integer value in $\left\{0,1,2,…,{N}_{max}^{SL - TCI}-1\right\}$, where ${N}_{max}^{SL - TCI}$ is a positive integer greater than or equal to 1, and indicates a maximum quantity of the SL TCI identifier. Optionally, ${N}_{max}^{SL - TCI}$ may be one of {8, 16, 32, 64, 128}. It should be noted that the TCI in the Uu air interface is represented as a TCI-state, and the TCI-state provides an identifier of the TCI-state, and an RS and a QCL type that correspond to a QCL relationship. In embodiments of this application, the TCI in the PC5 interface is represented as a TCI identifier, and a QCL relationship is not provided. In this way, a design is simplified and signaling overheads are reduced.

In addition, in the Uu interface, signaling used to implement configuration and indication of the TCI-state of the RS includes signaling such as RRC, a MAC CE, and DCI. This is excessively complex for configuring and indicating the TCI in the SL scenario. In addition, there is no RRC signaling in the PC5 interface, and there is only PC5-RRC signaling. In addition, the PC5-RRC signaling in the SL does not include a similar information element similar to the TCI-state configured in the Uu air interface. The MAC CE in the PC5 interface does not include the MAC CE that activates a plurality of TCI-states in the Uu air interface. Therefore, in the PC5 interface, the TCI cannot be configured and indicated according to the method in the Uu air interface.

Based on the foregoing descriptions, embodiments of this application provide a communication method and an apparatus, to resolve a technical problem that a current SL lacks a configuration and an indication of an SL TCI identifier. There are two solutions for indicating the SL TCI identifier. A first solution is an explicit indication. A first terminal apparatus may send first indication information to a second terminal apparatus, where the first indication information indicates an SL TCI identifier of a first reference signal. The second terminal apparatus may determine the SL TCI identifier of the first reference signal based on the first indication information. A second solution is an implicit indication. A first terminal apparatus may generate a first signal based on an SL TCI identifier of the first signal, and send the first signal to a second terminal apparatus. Then, the second terminal apparatus may determine the SL TCI identifier of the first signal based on the first signal. There are two solutions for configuring the SL TCI identifier. In a first solution, a first terminal apparatus determines a plurality of SL TCI identifiers based on a quantity of panels, transmission beams, or antennas. Then, the first terminal apparatus may send configuration information of the plurality of SL TCI identifiers to a second terminal apparatus. In a second solution, a plurality of SL TCI identifiers are preconfigured in a resource pool. A first terminal apparatus and a second terminal apparatus each determine the plurality of SL TCI identifiers based on configuration information of the corresponding resource pool.

A communication method and an apparatus provided in embodiments of this application may be applied to a network architecture. As shown in FIG. 5, a network architecture is provided, including a first terminal apparatus 501 and a second terminal apparatus 502. Sidelink communication may be performed between the first terminal apparatus 501 and the second terminal apparatus 502 over a sidelink, to transmit sidelink information. The transmitted sidelink information may include data (data), a scheduling assignment (scheduling assignment, SA), and the like. Optionally, the sidelink information may further include channel state information (channel state information, CSI), hybrid automatic repeat request (hybrid automatic repeat request, HARQ) information, and the like. The HARQ information may be specifically acknowledgement information (acknowledgement, ACK), a negative acknowledgement (negative acknowledgement, NACK), or the like.

Optionally, the network architecture shown in FIG. 5 may further include a network apparatus 503, and the network apparatus 503 may be an access network device. The terminal apparatus 501 and/or the terminal apparatus 502 may communicate with the network apparatus 503 through a Uu air interface. Communication in the Uu air interface includes uplink transmission and downlink transmission. The uplink transmission means that the terminal apparatus 501 and/or the terminal device 502 send/sends an uplink signal or uplink information to the network apparatus 503. The downlink transmission means that the network apparatus 503 sends a downlink signal or downlink information to the terminal apparatus 501 and/or the terminal apparatus 502.

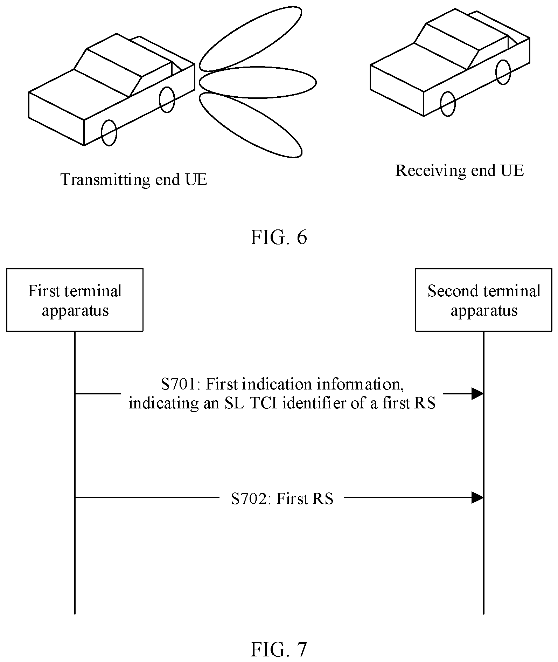

The communication method and the apparatus provided in embodiments of this application may be applied to an SL scenario. The SL scenario may include a scenario such as vehicle-to-everything (vehicle-to-everything, V2X) or device-to-device (device-to-device, D2D). As shown in FIG. 6, a vehicle-to-vehicle (vehicle-to-vehicle, V2V) scenario is used as an example. Transmitting end UE and receiving end UE may be respectively described as a first terminal apparatus and a second terminal apparatus. In FIG. 6, for example, both the transmitting end UE and the receiving end UE are vehicle UE. The transmitting end UE and the receiving end UE in an actual application scenario may be terminal devices in any form. The foregoing scenario further includes a transmission beam. The transmission beam is a directional radiation mode formed by the transmitting end UE by using a sending signal and by using a technology such as multiple-panel or multiple-beam, and is represented by a water drop shape in FIG. 6.

As shown in FIG. 7, a communication method is provided. The communication method may correspond to the foregoing first explicit indication solution, and the method is performed by a first terminal apparatus and a second terminal apparatus. It may be understood that the first terminal apparatus and the second terminal apparatus may be terminal devices, or components (for example, chips, circuits, or other components) located in the terminal devices. The procedure includes the following steps.

S701: The first terminal apparatus sends first indication information to the second terminal apparatus. Correspondingly, the second terminal device receives the first indication information from the first terminal device.

S702: The first terminal apparatus sends a first RS to the second terminal apparatus on a first channel. Correspondingly, the second terminal apparatus receives the first RS from the first terminal device on the first channel. The first indication information indicates a first SL TCI identifier of the first RS. The first SL TCI identifier indicates a channel feature of the first channel for transmitting the first RS, or the first SL TCI identifier indicates a channel feature experienced by the first RS. It may be understood that, because the first terminal apparatus sends the first RS by using different panels, transmission beams, or antennas, channel features experienced by the first RS are different. Therefore, the SL TCI identifier may be used to identify the different panels, transmission beams, antennas, or the like. In a possible implementation, after receiving the first indication information, the second terminal device may determine the SL TCI identifier of the first RS based on the first indication information. Further, the second terminal device may determine, based on the SL TCI identifier of the first RS, the panel, the transmission beam, the antenna, or the like used by the first terminal device to send the first RS. It should be noted that the first terminal apparatus may simultaneously perform S701 and S702. To be specific, the first terminal apparatus may simultaneously send the first indication information and the first RS to the second terminal apparatus. Alternatively, the first terminal apparatus may send the first indication information and the first RS in sequence. For example, the first terminal apparatus may first send the first indication information and then send the first RS, or first send the first RS and then send the first indication information. This is not limited.

The first reference signal may include a PSSCH DMRS, a physical sidelink control channel (physical sidelink control channel, PSCCH) DMRS, or an SL CSI-RS. The first indication information in S701 is carried in second-stage SCI (2^{nd} stage SCI).

It should be understood that SCI in a sidelink may include first-stage SCI (1^{st} stage SCI) and the second-stage SCI. The first-stage SCI is carried on a PSCCH, and is mainly for scheduling a corresponding PSSCH and the second-stage SCI. The second-stage SCI is carried on the PSSCH, and is mainly for demodulating and decoding the corresponding PSSCH and/or control HARQ and CSI procedures.

For a method of indicating an SL TCI identifier of the PSSCH DMRS and/or the PSCCH DMRS, in a possible implementation, the first terminal apparatus sends first indication information to the second terminal apparatus. The first indication information may indicate the SL TCI identifier of the PSSCH DMRS and/or the PSCCH DMRS, and the first indication information may be carried in M bits in the second-stage SCI, where M is a positive integer. The second terminal apparatus may determine the SL TCI identifier of the PSSCH DMRS and/or the PSCCH DMRS based on the first indication information. Optionally, M may be a positive integer defined in a standard. For example, M may be one of {1, 2, 3, 4, 5, 6}. Alternatively, M may be a positive integer obtained based on a configured quantity N^{SL-TCI} of SL TCI identifiers. For example, M may satisfy: $M = \left⌈{log}_{2}\left({N}^{SL - TCI}\right)\right⌉$.

For a method of indicating an SL TCI identifier of the SL CSI-RS, in a possible implementation, the first terminal apparatus may configure an SL CSI-RS pattern (pattern), and send first indication information to the second terminal apparatus. The first indication information indicates the SL TCI identifier of an SL CSI-RS. The first indication information may be carried in M bits in the second-stage SCI, where M is a positive integer. Receiving end UE may determine the SL TCI identifier of the SL CSI-RS based on the first indication information. Similarly, M may be a positive integer defined in a standard. For example, M may be one of {1, 2, 3, 4, 5, 6}. Alternatively, M may be a positive integer obtained based on a configured quantity N^{SL-TCI} of SL TCI identifiers. For example, M satisfies: $M = \left⌈{log}_{2}\left({N}^{SL - TCI}\right)\right⌉$. Optionally, the first terminal apparatus may include the indication information of the SL TCI identifier in the second-stage SCI only when the first terminal apparatus triggers channel measurement by using the second-stage SCI. Otherwise, the first terminal apparatus no longer includes the indication information of the SL TCI identifier in the second-stage SCI.

In this embodiment of this application, according to the foregoing provided method of indicating the SL TCI identifier, a disadvantage that a current SL lacks a method of indicating an SL TCI identifier can be compensated for. Further, based on the foregoing provided simplified definition of the SL TCI identifier, in comparison with the Uu air interface, signaling overheads of indicating the TCI can be reduced, to resolve a technical problem that a TCI indication method is excessively complex because there are excessively many QCL types in the Uu air interface.

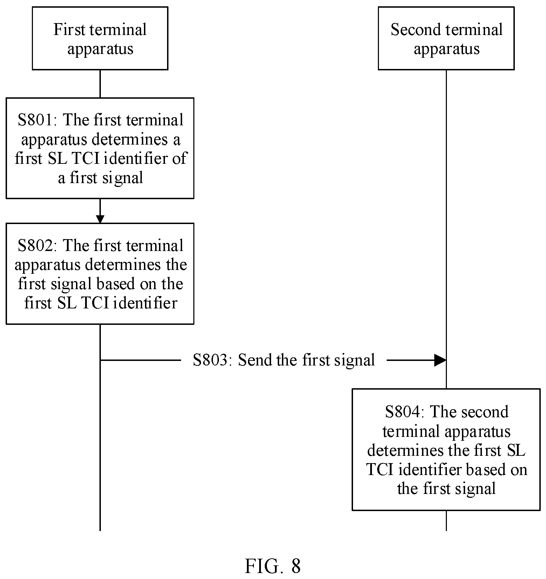

As shown in FIG. 8, a communication method is provided. The communication method may correspond to the foregoing second implicit indication solution, and the method is performed by a first terminal apparatus and a second terminal apparatus. It may be understood that the first terminal apparatus and the second terminal apparatus may be terminal devices, or components (for example, chips, circuits, or other components) located in the terminal devices. The procedure includes the following steps.

S801: The first terminal apparatus determines a first SL TCI identifier of a first signal, where the first SL TCI identifier indicates a channel feature of a first channel for transmitting the first signal, or the first SL TCI identifier is an identifier of a channel feature experienced by a channel for transmitting the first signal.

S802: The first terminal apparatus determines the first signal based on the first SL TCI identifier.

S803: The first terminal apparatus sends the first signal to the second terminal apparatus on the first channel. Correspondingly, the second terminal apparatus receives the first signal from the first terminal apparatus on the first channel.

S804: The second terminal apparatus determines the first SL TCI identifier based on the first signal. Optionally, because the first signal is sent by using different panels, beams, or antennas, channel features experienced by the first signal are different. Therefore, the SL TCI identifier may be used to identify the different panels, beams, or antennas. In a possible implementation, after determining the SL TCI identifier of the first signal, the second terminal device may further determine, based on the SL TCI identifier of the first signal, the panel, the beam, the antenna, or the like for sending the first signal.

In a possible implementation, the first signal may be a sidelink synchronization signal block (sidelink synchronization signal block, S-SSB), and the S-SSB includes a physical sidelink broadcast channel (physical sidelink broadcast channel, PSBCH) DMRS. An initialization (initialization) parameter of a sequence of the PSBCH DMRS is generated based on the first SL TCI identifier. A specific implementation of S802 may be: The first terminal apparatus generates the initialization parameter of the sequence of the PSBCH DMRS based on the first SL TCI identifier, and the first terminal apparatus generates the sequence of the PSBCH DMRS based on the initialization parameter of the sequence of the PSBCH DMRS. A specific implementation of S804 may be: The second terminal apparatus determines the initialization parameter of the sequence of the PSBCH DMRS based on the received PSBCH DMRS; and the second terminal apparatus determines the first SL TCI identifier based on the initialization parameter of the sequence of the PSBCH DMRS.

Optionally, the initialization parameter of the sequence of the PSBCH DMRS may satisfy: ${c}_{init} = {2}^{11} \left({\overline{i}}_{S - SSB}+1\right) \left({N}_{SL}^{ID}+1\right) + {2}^{6} \left({\overline{i}}_{S - SSB}+1\right) + {n}^{SL - TCI}$
cᵢₙᵢₜ represents the initialization parameter of the sequence of the PSBCH DMRS, i̅_{S-SSB} represents an integer value obtained based on an S-SSB index (i_{S-SSB}), ${N}_{SL}^{ID}$ represents a sidelink synchronization signal identifier (sidelink synchronization signal identification, SL SSID), n^{SL-TCI} represents the first SL TCI identifier, and n^{SL-TCI} is an integer satisfying 0 ≤ n^{SL-TCI} ≤ N^{SL-TCI} - 1. Further, optionally, a process of obtaining the integer value i̅_{S-SSB} based on the S-SSB index i_{S-SSB} satisfies: i̅_{S-SSB} = i_{S-SSB} mod 2^{U}. mod represents a modulo operation, and U is an integer greater than or equal to 0. For example, U is one of {1, 2, 3, 4}, and preferably U = 3.

Alternatively, the initialization parameter of the sequence of the PSBCH DMRS may satisfy: ${c}_{init} = {2}^{M} {N}_{SL}^{ID} + {n}^{SL - TCI}$
cᵢₙᵢₜ represents the initialization parameter of the sequence of the PSBCH DMRS, ${N}_{SL}^{ID}$ represents an SL SSID, n^{SL-TCI} represents the first SL TCI identifier, n^{SL-TCI} is an integer satisfying 0 ≤ n^{SL-TCI} ≤ N^{SL-TCI} - 1, and M is a positive integer. M may be a positive integer defined in a standard. For example, M is one of {1, 2, 3, 4, 5, 6}. Alternatively, M is a positive integer obtained based on a configured quantity N^{SL-TCI} of SL TCI identifiers. For example, $M = \left⌈{log}_{2}\left({N}^{SL - TCI}\right)\right⌉$.

In another possible implementation, the first signal may be an S-SSB. The S-SSB may also include a PSBCH. An initialization parameter of a scrambling sequence of the PSBCH is determined based on the first SL TCI identifier. A specific implementation of S802 may be: The first terminal apparatus determines a scrambling sequence based on an initialization parameter of the scrambling (scrambling) sequence of encoded bits (encoded bits) on the PSBCH; and scrambles the PSBCH by using the scrambling sequence. A specific implementation of S804 may be: The second terminal apparatus descrambles the PSBCH, to determine the scrambling sequence of the encoded bits on the PSBCH; determines the initialization parameter of the scrambling sequence of the PSBCH based on the scrambling sequence of the encoded bits on the PSBCH; and further determines the first SL TCI identifier based on the initialization parameter of the scrambling sequence.

Optionally, the initialization parameter of the scrambling sequence of the PSBCH satisfies: ${c}_{init} = {2}^{M} {N}_{SL}^{ID} + {n}^{SL - TCI}$
cᵢₙᵢₜ represents the initialization parameter of the scrambling sequence of the PSBCH, ${N}_{SL}^{ID}$ represents an SL SSID, n^{SL-TCI} represents the first SL TCI identifier, n^{SL-TCI} is an integer satisfying 0 ≤ n^{SL-TCI} ≤ N^{SL-TCI} - 1, and M is a positive integer. M may be a positive integer defined in a standard. For example, M is one of {1, 2, 3, 4, 5, 6}. Alternatively, M is a positive integer obtained based on a configured quantity N^{SL-TCI} of SL TCI identifiers. For example, $M = \left⌈{log}_{2}\left({N}^{SL - TCI}\right)\right⌉$.

In this embodiment of this application, according to the foregoing method of indicating the SL TCI identifier, not only a technical disadvantage of a lack of the SL TCI identifier in an SL is compensated for, but also signaling overheads of indicating the TCI are reduced in comparison with a Uu air interface. Further, in this embodiment, because the first terminal apparatus does not need to send indication information of the SL TCI identifier, the second terminal apparatus can determine the SL TCI identifier, the signaling overheads of indicating the TCI can further be reduced.

An embodiment of this application further provides a communication method. According to this communication method, an SL TCI identifier may be configured for a first terminal apparatus and/or a second terminal apparatus.

In a possible implementation, the first terminal apparatus may determine N^{SL-TCI} SL TCI identifiers, and send first configuration information to the second terminal apparatus, where the first configuration information is for configuring the N^{SL-TCI} SL TCI identifiers for the second terminal apparatus. Optionally, the first configuration information may be carried in PC5-RRC signaling or a MAC CE of a PC5 interface. N^{SL-TCI} is a positive integer greater than or equal to 1 and less than or equal to ${N}_{max}^{SL - TCI}$. The N^{SL-TCI} SL TCI identifiers represent a quantity of SL TCI identifiers that can be used by the first terminal apparatus to send each RS.

Optionally, N^{SL-TCI} may be obtained based on a quantity of panels activated by the first terminal apparatus or a quantity of all panels. For example, when the first terminal apparatus has four panels, the first terminal apparatus configures N^{SL-TCI} = 4 SL TCI identifiers. Further, when there is only one antenna on each panel, a quantity of panels is equivalent to a quantity of antennas. Alternatively, N^{SL-TCI} may be determined based on a quantity of transmission beams supported by the first terminal apparatus. For example, when the first terminal apparatus supports 32 transmission beams, the first terminal apparatus may configure N^{SL-TCI} = 32 SL TCI identifiers.

In another possible implementation, N^{SL-TCI} SL TCI identifiers may be configured in a resource pool (resource pool). N^{SL-TCI} is a positive integer greater than or equal to 1 and less than or equal to ${N}_{max}^{SL - TCI}$. The N ^{SL-TCI} SL TCI identifiers represents a quantity of SL TCI identifiers that can be used by any sending apparatus in the resource pool to send each RS. The resource pool is a set of time-frequency resources that can be used for SL transmission, and may be in a specific form of a set corresponding to a plurality of orthogonal frequency division multiplexing (orthogonal frequency division multiplexing, OFDM) symbols in time domain and a plurality of consecutive physical resource blocks (physical resource blocks, PRBs) in frequency domain. A single PRB includes 12 subcarriers (subcarrier) in frequency domain. The resource pool may be specifically a sending resource pool or a receiving resource pool. Correspondingly, the first terminal apparatus may determine the N^{SL-TCI} SL-TCI identifiers based on configuration information of the sending resource pool. The second terminal apparatus may determine the N^{SL-TCL} SL-TCI identifiers based on configuration information of the receiving resource pool.

In this embodiment of this application, according to the foregoing method of configuring the SL TCI identifier, a technical disadvantage of a lack of the SL TCI identifier in an SL is compensated for. In addition, based on the foregoing proposed simplified definition of the SL TCI identifier, in comparison with the Uu air interface, signaling overheads of configuring the TCI can be reduced, to resolve a technical problem that a TCI configuration method is excessively complex because there are excessively many QCL types in the Uu air interface.

It should be noted that the method of configuring the SL TCI identifier and the method of indicating the SL TCI identifier may be used in combination, or may be used independently. This is not limited.

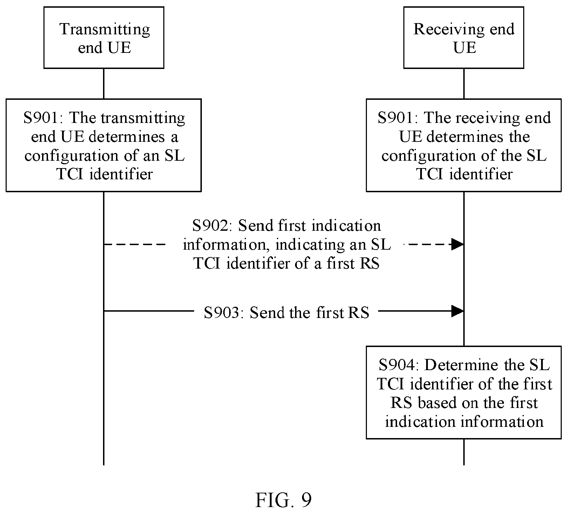

As shown in FIG. 9, a communication method is provided. The communication method may be an example in which the method of configuring the SL TCI identifier and the method of indicating the SL TCI identifier are used in combination. In this procedure, an example in which a first terminal apparatus is transmitting end UE and a second terminal apparatus is receiving end UE is used for description. The procedure includes the following steps.

S901: The transmitting end UE determines a configuration of an SL TCI identifier, and the receiving end UE determines the configuration of the SL TCI identifier.

In a possible implementation, the transmitting end UE configures *N^{SL-TCI}* SL TCI identifiers, and sends configuration information to the receiving end UE. The configuration information is for configuring the *N^{SL-TCI}* SL TCI identifiers, the configuration information is carried in PC5-RRC signaling or a MAC CE, and *N^{SL-TCI}* is a positive integer less than or equal to ${N}_{max}^{SL - TCI}$. Alternatively, N^{SL-TCI} SL TCI identifiers are configured in a resource pool (resource pool). The transmitting end UE determines the N^{SL-TCI} SL TCI identifiers based on configuration information of the resource pool. The receiving end UE determines the N^{SL-TCI} SL TCI identifiers based on the configuration information of the resource pool.

In this embodiment of this application, the transmitting end UE may indicate an SL TCI identifier of a first RS in an explicit indication manner or an implicit indication manner. If the transmitting end UE indicates the SL TCI identifier of the first RS in the explicit indication manner, optionally, the procedure shown in FIG. 9 may include S902: The Transmitting end UE sends first indication information to the receiving end UE, where the first indication information indicates the SL TCI identifier of the first RS, and the first RS is any RS sent by the transmitting end UE.

When the first RS is a PSSCH DMRS and/or a PSSCH DMRS, a method of indicating the SL TCI identifier may be as follows: The transmitting end UE sends first indication information to the receiving end UE, where the first indication information indicates an SL TCI identifier of the PSSCH DMRS and/or the PSCCH DMRS, the first indication information may be carried in M bits in second-stage SCI, and M is a positive integer. The receiving end UE may determine the SL TCI identifier of the PSSCH DMRS and/or the PSCCH DMRS by using the first indication information. For M, refer to the record in the procedure in FIG. 7, and details are not described herein again.

When the first RS is an SL CSI-RS, a method of indicating the SL TCI identifier may be as follows: The transmitting end UE configures an SL CSI-RS pattern (pattern), and sends first indication information to the receiving end UE, where the indication information indicates an SL TCI identifier of a first SL CSI-RS, the first indication information is carried in M bits in second-stage SCI, and M is a positive integer. The receiving end UE determines the SL TCI identifier of the SL CSI-RS by using the first indication information.

When the first RS is an S-SSB, the SL TCI identifier may be indicated by using an implicit method. The transmitting end UE may add an SL TCI identifier of the S-SSB to an initialization parameter cᵢₙᵢₜ of a sequence of a PSBCH DMRS or an initialization parameter *cᵢₙᵢₜ* of a scrambling (scrambling) sequence of encoded bits (encoded bits) on a PSBCH. For a specific carrying manner, refer to the record in the procedure shown in FIG. 8, and details are not described herein again.

S903: The transmitting end UE sends the first RS to the receiving end UE.

It should be noted that the transmitting end UE may simultaneously perform step S902 and step S903. To be specific, the transmitting end UE may simultaneously send, to the receiving end UE, the first RS and the first indication information that indicates the SL TCI identifier of the first RS. Alternatively, the transmitting end UE may perform step S902 and step S903 in sequence. For example, the transmitting end UE may first perform step S902 and then perform step S903, or the transmitting end UE may first perform step S903 and then perform step S902. This is not limited.

S904: The receiving end UE determines the SL TCI identifier of the first RS based on the first indication information from the transmitting end UE.

A TCI framework in a Uu interface is constructed based on definitions of a TCI-state and QCL in the Uu air interface. A method of configuring and indicating the TCI-state in the Uu air interface is provided by using RRC signaling, a MAC CE, and DCI. The TCI framework in the Uu air interface is excessively flexible for a PC5 interface. A manner of configuring and indicating the TCI framework is complex. RRC signaling and a MAC CE that are used do not exist in the PC5 interface. Signaling overheads are high. In an embodiment of this application, a new SL TCI identifier is defined for the PC5 interface, and a proper configuration and indication method is used. The SL TCI identifier is configured and indicated by using higher layer signaling and physical layer control information in the PC5 interface, so that signaling overheads are reduced.

Based on the foregoing method of configuring and indicating the SL TCI identifier, an embodiment of this application provides a panel selection method, a beam selection method, or an antenna selection method. The method can resolve a technical problem that there is no panel selection method, beam selection method, or antenna selection method in an SL. An example in which a first terminal apparatus is transmitting end UE and a second terminal apparatus is receiving end UE is used for description.

A principle of the method is as follows: Channel features experienced by RSs sent by different panels, beams, or antennas are different, so that when an SL TCI identifier is for identifying different channel features, the SL TCI identifier may further identify different panels, beams, or antennas. The receiving end UE may measure the reference signals sent by the different panels, beams, or antennas, and feed back a measurement result and a corresponding SL TCI identifier. The transmitting end UE selects a panel, a beam, or an antenna based on the measurement result. For example, the transmitting end UE may select an antenna, a beam, a panel, or the like that corresponds to an SL TCI identifier corresponding to a best measurement result.

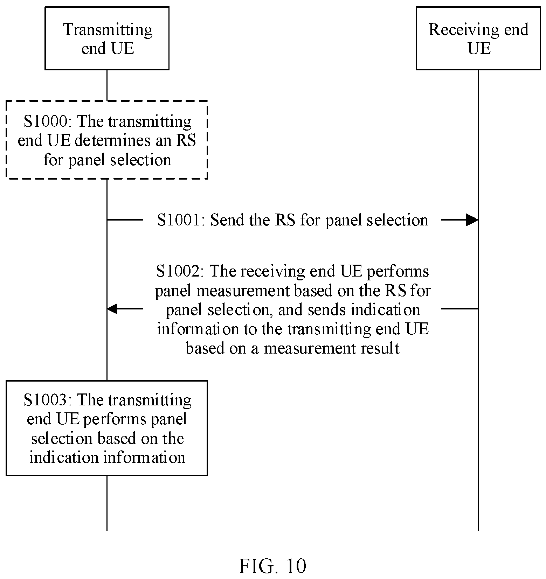

In this embodiment of this application, it may be set that the transmitting end UE has K candidate panels or candidate beams, where K is a positive integer. Optionally, when there is only one antenna on each panel, the K candidate panels are equivalent to K candidate antennas. In the following embodiments, panel selection in which a panel is used as a candidate object is used as an example to describe procedures in embodiments of this application. It may be understood that, in addition to the panel, the actual candidate object may alternatively be a beam, an antenna, or the like. As shown in FIG. 10, the procedure includes the following steps.

Optionally, S1000: Transmitting end UE determines an RS for panel selection.

In a possible implementation, the transmitting end UE may determine that the RS for panel selection is an SL CSI-RS. Optionally, the transmitting end UE may configure an SL CSI-RS pattern; and send indication information to receiving end UE. The indication information is for configuring the SL CSI-RS pattern. Alternatively, the transmitting end UE may determine that the RS for panel selection is an S-SSB.

It should be noted that the foregoing step S1000 is an optional step, that is, the transmitting end UE may skip determining the RS for panel selection. In this case, the RS for panel selection may be defined in a standard, configured in a resource pool, preconfigured by the transmitting end UE, or the like. This is not limited.

S1001: The transmitting end UE sends, to the receiving end UE, the RS for panel selection.

In a possible implementation, the RS for panel selection may be an SL CSI-RS. The transmitting end UE may send the SL CSI-RS and first indication information to the receiving end UE. The first indication information indicates an SL TCI identifier of the SL CSI-RS. For example, the transmitting end UE sends the first indication information and the SL CSI-RS to the receiving end UE in the n^{th} slot of N^{slot} slots by using the k^{th} panel. N^{slot} is a positive integer, n is an integer satisfying 0 ≤ n ≤ N^{slot} - 1, k is an integer satisfying 0 ≤ k ≤ K - 1, the first indication information indicates an SL TCI identifier n^{SL-TCI} of an SL CSI-RS sent in the n^{th} slot, n^{SL-TCI} is an integer satisfying 0 ≤ n^{SL-TCI} ≤ N ^{SL-TCI} - 1, and N^{SL-TCI} is a positive integer greater than or equal to K. The receiving end UE receives the first indication information and the SL CSI-RS from the transmitting end UE in the N^{slot} slots. In addition, the receiving end UE determines the SL TCI identifier of the SL CSI-RS by using the first indication information.

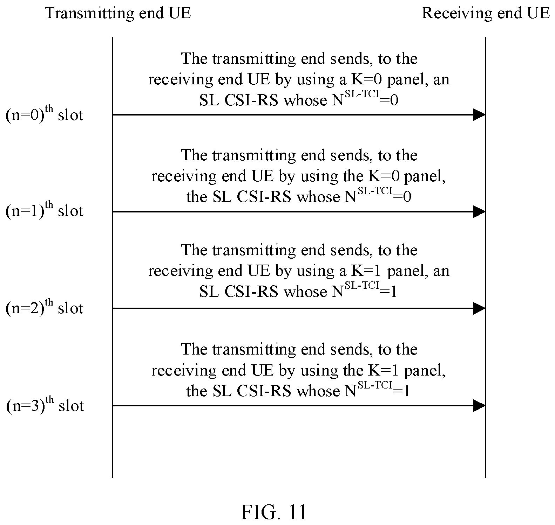

For example, as shown in FIG. 11, transmitting end UE has K = 2 candidate panels, and SL TCI identifiers n^{SL-TCI} corresponding to the two candidate panels are 0 and 1 respectively. The transmitting end UE may separately send an SL CSI-RS by using N^{slot} = 4 slots.

For example, the transmitting end UE may send, by using a panel 0 in the 0% slot and the 1^{st} slot, an SL CSI-RS whose SL TCI identifier is 0. The transmitting end UE sends, by using a panel 1 in the 2^{nd} slot and the 3^{rd} slot, an SL CSI-RS whose SL TCI identifier is 1.

In another possible implementation, the RS for panel selection may be an S-SSB. The transmitting end UE may send the S-SSB to the receiving end UE, where the S-SSB may carry first indication information indicating an SL TCI identifier. For example, the transmitting end UE may send the S-SSB to the receiving end UE in the n^{th} slot of N^{slot} slots by using the k^{th} panel, where the S-SSB includes the first indication information. N^{slot} is a positive integer, n is an integer satisfying 0 ≤ n ≤ N^{slot} - 1, k is an integer satisfying 0 ≤ k ≤ K - 1, the first indication information indicates an SL TCI identifier, namely, n^{SL-TCI}, of the S-SSB sent in the n^{th} slot, n^{SL-TCI} is an integer satisfying 0 ≤ n^{SL-TCI} ≤ N^{SL-TCI} - 1, and N^{SL-TCI} is a positive integer greater than or equal to K. The receiving end UE receives the S-SSB from the transmitting end UE in the N^{slot} slots. The S-SSB includes the first indication information. The receiving end UE determines the SL TCI identifier of the S-SSB by using the first indication information.

It should be noted that the "slot" in this embodiment of this application is a time unit used to transmit downlink information, uplink information, or SL information. Optionally, one slot may include 14 or 12 OFDM symbols. In an NR system, for different subcarrier spacings (subcarrier spacings, SCSs), one frame (frame) also includes different quantities of slots. Duration of one frame is set to 10 ms. If a normal cyclic prefix (normal cyclic prefix, NCP) is used, when an SCS is 15 kHz, a 10 ms frame includes 10 slots, and a single slot corresponds to 1 ms; when an SCS is 30 kHz, a 10 ms frame includes 20 slots, and a single slot corresponds to 0.5 ms; when an SCS is 60 kHz, a 10 ms frame includes 40 slots, and a single slot corresponds to 0.25 ms; or when an SCS is 120 kHz, a 10 ms frame includes 80 slots, and a single slot corresponds to 0.125 ms. Alternatively, if an extended cyclic prefix (extended cyclic prefix, ECP) is used, only a configuration in which an SCS is 60 kHz, a 10 ms frame includes 40 slots, and a single slot corresponds to 0.25 ms is supported.

S1002: The receiving end UE measures the RS for panel selection, and sends second indication information to the transmitting end UE based on a measurement result. Optionally, the second indication information may be carried in one or more MAC CEs.

S1003: The transmitting end UE performs panel selection based on the second indication information.

In a possible implementation, after receiving RSs sent by using different panels, the receiving end UE may separately measure the RSs to obtain measurement results. The receiving end UE may send the second indication information to the transmitting end UE. The second indication information indicates different measurement results and an SL TCI identifier corresponding to each measurement result. After receiving the different measurement results, the transmitting end UE selects a measurement result satisfying a condition, and uses, as a selected panel, a panel corresponding to an SL TCI identifier corresponding to the measurement result satisfying the condition. Optionally, the transmitting end UE may subsequently transmit data with the receiving end UE by using the selected panel. Alternatively, the receiving end UE may directly select, based on the measurement results of the different RSs, the measurement result satisfying the condition. Then, the second indication information sent by the receiving end UE to the transmitting end UE carries only the SL TCI identifier corresponding to the measurement result satisfying the condition. The receiving end UE may use, as a selected panel, a panel corresponding to the SL TCI identifier carried in the second indication information.

The example in FIG. 11 is still used. The transmitting end UE has two panels, which are respectively a panel 0 and a panel 1. The transmitting end UE uses the panel 0 to send an SL CSI-RS in the 0^{th} slot, and an SL TCI identifier corresponding to the panel 0 is 0. The transmitting end UE uses the panel 1 to send an SL CSI-RS in the 1^{st} slot, and an SL TCI identifier corresponding to the panel 1 is 1. The receiving end UE may measure the SL CSI-RS sent in the 0^{th} slot, to obtain a channel measurement result 0. Similarly, the receiving end UE may also measure the SL CSI-RS sent in the 1^{st} slot, to obtain a channel measurement result 1. The receiving end UE may separately feed back the channel measurement results of the foregoing two SL CSI-RSs and an SL TCI identifier corresponding to each channel measurement result to the transmitting end UE. Then, in S1003, the receiving end UE may perform panel selection based on the channel measurement results of the CSI-RSs. For example, if the channel measurement result corresponding to the CSI-RS sent by using the panel 0 is better, the transmitting end UE may subsequently select the panel 0 to communicate with the receiving end UE. Alternatively, the foregoing panel selection process may occur on a receiving end UE side. The receiving end UE may directly select a panel based on an RS measurement result, and subsequently, the second indication information in S1002 may carry only an SL TCI identifier of the selected panel.

It should be noted that, after selecting an RS, the transmitting end UE needs to send the RS on different panels for a plurality of times, and for each sending, the receiving end UE needs to feed back a measurement result. Therefore, in the procedure shown in FIG. 10, S1001 and S1002 are cyclically performed. For example, the RS that is determined by the transmitting end UE and that is for panel selection is an SL CSI-RS. The transmitting end UE has two panels. In this case, the transmitting end UE needs to separately send the SL CSI-RS on the two panels. In addition, for each CSI-RS, the receiving end UE needs to feed back a measurement result. For example, in a possible implementation, an execution sequence of the foregoing processes may be: The transmitting end UE sends an SL CSI-RS 0 to the receiving end UE by using the panel 0, and the receiving end UE feeds back a measurement result of the CSI-RS 0. The transmitting end UE transmits an SL CSI-RS 1 to the receiving end UE by using the panel 1, and the receiving end UE feeds back a measurement result of the CSI-RS 1. Alternatively, the transmitting end UE respectively sends the CSI-RS 0 and the CSI-RS 1 to the receiving end UE by using the panel 0 and the panel 1. Then, the receiving end UE separately feeds back measurement results of the CSI-RS 0 and the CSI-RS 1. This is not limited.

In a Uu air interface, a TCI framework in the Uu air interface is constructed by using definitions of a TCI-state and QCL, and panel selection or beam selection is implemented by using the TCI framework. However, the TCI framework in the Uu air interface cannot be applied to an SL due to high signaling overheads and absence of required signaling in a PC5 interface. In the foregoing embodiment, selection of a panel, a beam, or an antenna in the SL is implemented according to the proposed method of configuring and indicating the SL TCI identifier..

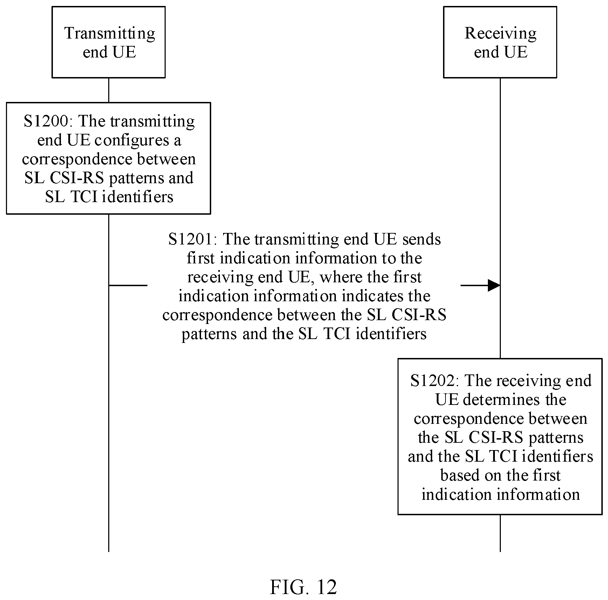

As shown in FIG. 12, a method of indicating an SL TCI identifier is provided. In the following embodiment, an example in which a first terminal apparatus is transmitting end UE and a second terminal apparatus is receiving end UE is used for description. A principle of the method is: A plurality of SL CSI-RS patterns are preconfigured for the transmitting end UE and the receiving end UE. SL CSI-RS patterns sent by using different panels, beams, or antennas may be different. Therefore, there may be a correspondence between the SL CSI-RS pattern and an SL TCI identifier. There may be a one-to-one relationship between the SL CSI-RS pattern and the SL TCI identifier, that is, one SL CSI-RS pattern corresponds to one SL TCI identifier. Alternatively, there may be a many-to-one relationship between the SL CSI-RS pattern and the SL TCI identifier, that is, a plurality of SL CSI-RS patterns correspond to one SL TCI identifier. Refer to FIG. 12. The method includes the following steps.

S1200: The transmitting end UE configures a correspondence between N^{CSI-RS} SL CSI-RS patterns and N^{SL-TCI} SL TCI identifiers. N^{CSI-RS} is a positive integer greater than or equal to 2, and N^{SL-TCI} is a positive integer less than or equal to N^{CSI-RS}

S1201: The transmitting end UE sends first indication information to the receiving end UE, where the first indication information indicates the correspondence between the N^{CSI-RS} SL CSI-RS patterns and the N^{SL-TCI} SL TCI identifiers. Correspondingly, the receiving end UE receives the first indication information from the transmitting end UE. Optionally, the first indication information may be carried in PC5-RRC signaling. Optionally, the N^{CSI-RS} SL CSI-RS patterns are configured for panel selection or beam selection.

S1202: The receiving end UE determines the correspondence between the N^{CSI-RS} SL CSI-RS patterns and the N^{SL-TCI} SL TCI identifiers based on the first indication information.

After S1202, the transmitting end UE may directly send an SL CSI-RS to a terminal device. After receiving the first SL CSI-RS, the receiving end UE may determine, based on the configured correspondence between the N^{CSI-RS} SL CSI-RS patterns and the N^{SL-TCI} SL TCI identifiers, an SL TCI identifier corresponding to a pattern of the first SL CSI-RS.

According to the foregoing method, a method of indicating SL TCI identifiers of a plurality of SL CSI-RS patterns is proposed. The transmitting end UE may preconfigure the correspondence between the SL CSI-RS patterns and the SL TCI identifiers for the receiving end UE, and subsequently, the transmitting end UE does not need to additionally indicate an SL TCI identifier of each SL CSI-RS pattern, so that signaling overheads are reduced.

Based on the foregoing method of indicating the SL TCI identifier, a method of panel selection, beam selection, or antenna selection is provided. In the following embodiment, an example in which a first terminal apparatus is transmitting end UE and a second terminal apparatus is receiving end UE is used for description.

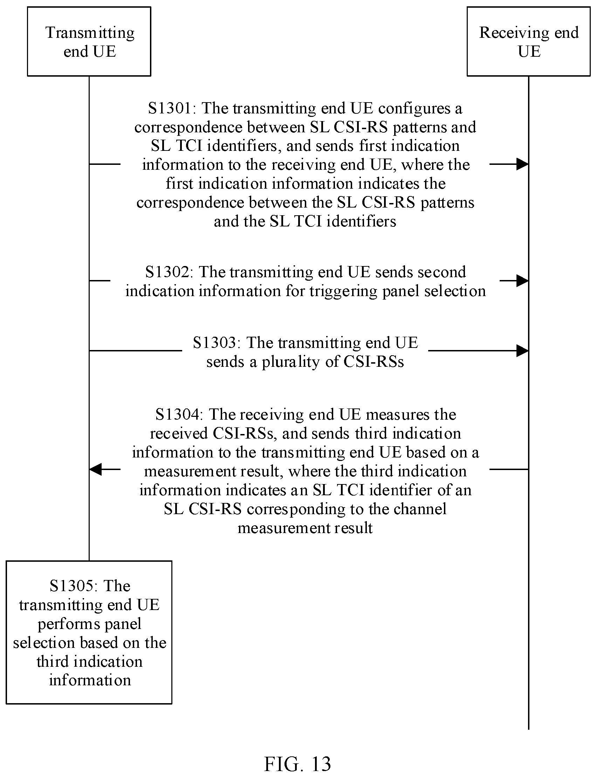

Similarly, in this example, the transmitting end UE may have K candidate panels or candidate beams, where K is a positive integer. Optionally, when there is only one antenna on each panel, the candidate panel is equivalent to a candidate antenna. In this embodiment of this application, an example in which a panel is used as a candidate object for panel selection is used for description. It may be understood that, in addition to the panel, the actual candidate object may alternatively be a beam, an antenna, or the like. As shown in FIG. 13, the procedure includes the following steps.

S1301: The transmitting end UE configures a correspondence between N^{CSI-RS} SL CSI-RS patterns and N^{SL-TCI} SL TCI identifiers,

The transmitting end UE sends first indication information to the receiving end UE, where the first indication information indicates the correspondence between the N^{CSI-RS} SL CSI-RS patterns and the N^{SL-TCI} SL TCI identifiers.

S1302: The transmitting end UE triggers panel selection.

In a possible implementation, the transmitting end UE may send second indication information to the receiving end UE, where the second indication information indicates that the transmitting end UE triggers panel selection, the second indication information is carried in M' bits in second-stage SCI, and M' is a positive integer. Optionally, M' = 1.

S1303: The transmitting end UE sends, to the receiving end UE, the SL CSI-RS identifiers corresponding to the N^{CSI-RS} SL CSI-RS patterns.

In a possible implementation, the transmitting end UE simultaneously sends, by using kₙ panels in the n^{th} slot of N^{slot} slots, SL CSI-RSs corresponding to gₙ SL CSI-RS patterns. N^{slot} is a positive integer, n is an integer satisfying 0 ≤ n ≤ N^{slot} - 1, kₙ is a positive integer less than or equal to K, kₙ satisfies ${\sum }_{n = 0}^{{N}^{slot} - 1} {k}_{n} = K$, gₙ is a positive integer less than or equal to N^{CSI-RS}, and gₙ satisfies ${\sum }_{n = 0}^{{N}^{slot} - 1} {g}_{n} \geq {N}^{CSI - RS}$. The receiving end UE receives, in the N^{slot} slots, the SL CSI-RSs that are from the transmitting end UE and that correspond to the N^{CSI-RS} SL CSI-RS patterns. The receiving end UE determines an SL TCI identifier of each SL CSI-RS based on the N^{CSI-RS} SL CSI-RS patterns.

S1304: The receiving end UE measures the received CSI-RSs to obtain a measurement result, and sends third indication information to the transmitting end UE based on the measurement result, where the third indication information indicates an SL TCI identifier of a CSI-RS corresponding to the channel measurement result. Correspondingly, the transmitting end UE receives the third indication information from the receiving end UE. Optionally, the third indication information may be carried in one or more MAC CEs.

S1305: The transmitting end UE performs panel selection based on the third indication information.

In this embodiment of this application, the transmitting end UE sends RSs on different panels, antennas, or beams, the receiving end UE measures the RSs and performs feedback, and the transmitting end UE performs panel selection based on a fed-back measurement result. This resolves a technical problem that there is no panel selection method, antenna selection method, or beam selection method in an SL. Further, compared with the procedure shown in FIG. 10, in the current solution, panel selection, antenna selection, or beam selection can be completed by using fewer slots, so that selection efficiency is improved. In addition, the second-stage SCI is not used to indicate the SL TCI identifier, so that signaling overheads are reduced.

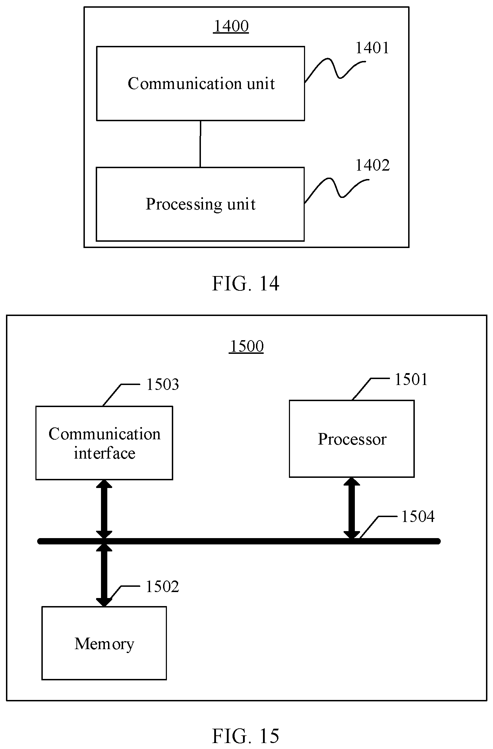

The foregoing describes in detail the methods provided in embodiments of this application with reference to FIG. 1 to FIG. 13. The following describes in detail apparatuses provided in embodiments of this application with reference to FIG. 14 and FIG. 15. It should be understood that descriptions of the apparatus embodiments correspond to descriptions of the method embodiments. Therefore, for content that is not described in detail, refer to the descriptions in the foregoing method embodiments.

FIG. 14 is a schematic block diagram of an apparatus 1400 according to an embodiment of this application. The apparatus 1400 is configured to implement functions of the first terminal apparatus or the second terminal apparatus in the foregoing methods. The apparatus may be a software unit or a chip system. The system may include a chip, or may include a chip and another discrete device. The apparatus includes a communication unit 1401, and may further include a processing unit 1402. The communication unit 1401 may communicate with the outside. The processing unit 1402 is configured to perform processing, The communication unit 1401 may also be referred to as a communication interface, a transceiver unit, an input/output interface, or the like.

In an example, the apparatus 1400 may implement the steps performed by the first terminal apparatus in the procedure shown in FIG. 7. The apparatus 1400 may be a terminal device, or may be a chip, a circuit, or the like configured in the terminal device. The communication unit 1401 may perform receiving and sending operations of the first terminal apparatus in the foregoing method embodiments, and the processing unit 1402 may perform processing-related operations of the first terminal apparatus in the foregoing method embodiments.

For example, the processing unit 1402 is configured to generate first indication information and a first reference signal. The communication unit 1401 is configured to send the first indication information to a second terminal apparatus, where the first indication information indicates a first sidelink transmission configuration indication SL TCI identifier of the first reference signal, and the first SL TCI identifier indicates a channel feature of a first channel for transmitting the first reference signal. The communication unit 1401 is further configured to send the first reference signal to the second terminal apparatus on the first channel.

Optionally, the first reference signal includes a physical sidelink shared channel demodulation reference signal, a physical sidelink control channel demodulation reference signal, or a sidelink channel state information reference signal, and the first indication information is carried in second-stage sidelink control information.

Optionally, the processing unit 1402 is further configured to determine N^{SL-TCI} SL TCI identifiers. N^{SL-TCI} is a positive integer greater than or equal to 1, and the first SL TCI identifier belongs to the N^{SL-TCI} SL TCI identifiers. The communication unit 1401 is configured to
send first configuration information to the second terminal apparatus. The first configuration information is for configuring the N^{SL-TCI} SL TCI identifiers for the second terminal apparatus.

Optionally, when determining the N^{SL-TCI} SL TCI identifiers, the processing unit 1402 is specifically configured to determine the N^{SL-TCI} SL TCI identifiers based on a quantity of panels, transmission beams, or antennas of a first terminal apparatus.

Optionally, the first configuration information is carried in a radio resource control message of a PC5 interface, or the first configuration information is carried in a media access control control element of a PC5 interface.

Optionally, the processing unit 1402 is further configured to determine N^{SL-TCI} SL TCI identifiers based on configuration information of a sending resource pool. N^{SL-TCI} is a positive integer greater than or equal to 1, and the first SL TCI identifier belongs to the N^{SL-TCI} SL TCI identifiers.

In an example, the apparatus 1400 may implement the steps performed by the second terminal apparatus in the procedure shown in FIG. 7. The apparatus 1400 may be a terminal device, or may be a chip, a circuit, or the like configured in the terminal device. The communication unit 1401 may perform receiving and sending operations of the second terminal apparatus in the foregoing method embodiments, and the processing unit 1402 may perform processing-related operations of the second terminal apparatus in the foregoing method embodiments.

For example, the communication unit 1401 is configured to receive first indication information from a first terminal apparatus. The first indication information indicates a first sidelink transmission configuration indication SL TCI identifier of a first reference signal, and the first SL TCI identifier indicates a channel feature of a first channel for transmitting the first reference signal. The communication unit 1401 is further configured to receive the first reference signal from the first terminal apparatus on the first channel. The processing unit 1402 is configured to process the first indication information and the first reference signal.

Optionally, the first reference signal includes a physical sidelink shared channel demodulation reference signal, a physical sidelink control channel demodulation reference signal, or a sidelink channel state information reference signal, and the first indication information is carried in second-stage sidelink control information.

Optionally, the communication unit 1401 is further configured to receive first configuration information from the first terminal apparatus. The first configuration information is for configuring N^{SL-TCI} SL TCI identifiers for a second terminal apparatus, and the first SL TCI identifier belongs to the N^{SL-TCI} SL TCI identifiers. The processing unit 1402 is configured to determine the N^{SL-TCI} SL TCI identifiers based on the first configuration information.

Optionally, the first configuration information is carried in a radio resource control message of a PC5 interface, or the first configuration information is carried in a media access control control element of a PC5 interface.

Optionally, the processing unit 1402 is further configured to determine N^{SL-TCI} SL TCI identifiers based on configuration information of a receiving resource pool. N^{SL-TCI} is a positive integer greater than or equal to 1, and the first SL TCI identifier belongs to the N^{SL-TCI} SL TCI identifiers.

In an example, the apparatus 1400 may implement the steps performed by the first terminal apparatus in the procedure shown in FIG. 8. The apparatus 1400 may be a terminal device, or may be a chip, a circuit, or the like configured in the terminal device. The communication unit 1401 may perform receiving and sending operations of the first terminal apparatus in the foregoing method embodiments, and the processing unit 1402 may perform processing-related operations of the first terminal apparatus in the foregoing method embodiments.

For example, the processing unit 1402 is configured to determine a first sidelink transmission configuration indication SL TCI identifier of a first signal. The first SL TCI identifier indicates a channel feature of a first channel for transmitting the first signal. The processing unit 1402 is further configured to determine the first signal based on the first SL TCI identifier. The communication unit 1401 is configured to send the first signal to a second terminal apparatus on the first channel.

Optionally, the first signal is a sidelink synchronization signal block, the sidelink synchronization signal block includes a physical sidelink broadcast channel demodulation reference signal, and an initialization parameter of a sequence of the physical sidelink broadcast channel demodulation reference signal is determined based on the first SL TCI identifier.

Optionally, the initialization parameter of the sequence of the physical sidelink broadcast channel demodulation reference signal satisfies: ${c}_{init} = {2}^{11} \left({\overline{i}}_{S - SSB}+1\right) \left({N}_{SL}^{ID}+1\right) + {2}^{6} \left({\overline{i}}_{S - SSB}+1\right) + {n}^{SL - TCI}$
cᵢₙᵢₜ represents the initialization parameter of the sequence of the physical sidelink broadcast channel demodulation reference signal, i̅_{S-SSB} represents an integer value obtained based on an index of the sidelink synchronization signal block, ${N}_{SL}^{ID}$ represents a sidelink synchronization signal identifier, n^{SL-TCI} represents the first SL TCI identifier, and n^{SL-TCI} is a natural number.

Obtaining i̅_{S-SSB} based on the index of the sidelink synchronization signal block satisfies: i̅_{S-SSB} = i_{S-SSB} mod 2^{U}. i_{S-SSB} represents the index of the sidelink synchronization signal block, U is an integer greater than or equal to 0, and mod represents a modulo operation.

Optionally, the initialization parameter of the sequence of the physical sidelink broadcast channel demodulation reference signal satisfies: ${c}_{init} = {2}^{M} {N}_{SL}^{ID} + {n}^{SL - TCI}$
cᵢₙᵢₜ represents the initialization parameter of the sequence of the physical sidelink broadcast channel demodulation reference signal, M is a positive integer, ${N}_{SL}^{ID}$ represents a sidelink synchronization signal identifier, n^{SL-TCI} represents the first SL TCI identifier, and n^{SL-TCI} is a natural number.

Optionally, the first signal is a sidelink synchronization signal block, the sidelink synchronization signal block includes a physical sidelink broadcast channel, and an initialization parameter of a scrambling sequence of the physical sidelink broadcast channel is determined based on the first SL TCI identifier.

Optionally, the initialization parameter of the scrambling sequence of the physical sidelink broadcast channel satisfies: ${c}_{init} = {2}^{M} {N}_{SL}^{ID} + {n}^{SL - TCI}$
cᵢₙᵢₜ represents the initialization parameter of the scrambling sequence of the physical sidelink broadcast channel, M is a positive integer, ${N}_{SL}^{ID}$ represents a sidelink synchronization signal identifier, n^{SL-TCI} represents the first SL TCI identifier, and n^{SL-TCI} is a natural number.

Optionally, the processing unit 1402 is further configured to determine N^{SL-TCI} SL TCI identifiers. N^{SL-TCI} is a positive integer greater than or equal to 1, and the first SL TCI identifier belongs to the N^{SL-TCI} SL TCI identifiers. The communication unit 1401 is further configured to send first configuration information to the second terminal apparatus. The first configuration information is for configuring the N^{SL-TCI} SL TCI identifiers for the second terminal apparatus.

Optionally, when determining the N^{SL-TCI} SL TCI identifiers, the processing unit 1402 is specifically configured to determine the N^{SL-TCI} SL TCI identifiers based on a quantity of panels, transmission beams, or antennas of a first terminal apparatus.

Optionally, the first configuration information is carried in a radio resource control message of a PC5 interface, or the first configuration information is carried in a media access control control element of a PC5 interface.

Optionally, the processing unit 1402 is further configured to determine N^{SL-TCI} SL TCI identifiers based on configuration information of a sending resource pool. N^{SL-TCI} is a positive integer greater than or equal to 1, and the first SL TCI identifier belongs to the N^{SL-TCI} SL TCI identifiers.

In an example, the apparatus 1400 may implement the steps performed by the second terminal apparatus in the procedure shown in FIG. 8. The apparatus 1400 may be a terminal device, or may be a chip, a circuit, or the like configured in the terminal device. The communication unit 1401 may perform receiving and sending operations of the second terminal apparatus in the foregoing method embodiments, and the processing unit 1402 may perform processing-related operations of the second terminal apparatus in the foregoing method embodiments.

For example, the communication unit 1401 is configured to receive a first signal from a first terminal apparatus on a first channel. The processing unit 1402 is configured to determine a first sidelink transmission configuration indication SL TCI identifier based on the first signal. The first SL TCI identifier indicates a channel feature of the first channel for transmitting the first signal.

Optionally, the first signal is a sidelink synchronization signal block, the sidelink synchronization signal block includes a physical sidelink broadcast channel demodulation reference signal. When determining the first SL TCI identifier based on the first signal, the processing unit 1402 is specifically configured to determine the first SL TCI identifier based on an initialization parameter of a sequence of the physical sidelink broadcast channel demodulation reference signal.

Optionally, the initialization parameter of the sequence of the physical sidelink broadcast channel demodulation reference signal satisfies: ${c}_{init} = {2}^{11} \left({\overline{i}}_{S - SSB}+1\right) \left({N}_{SL}^{ID}+1\right) + {2}^{6} \left({\overline{i}}_{S - SSB}+1\right) + {n}^{SL - TCI}$
cᵢₙᵢₜ represents the initialization parameter of the sequence of the physical sidelink broadcast channel demodulation reference signal, i̅_{S-SSB} represents an integer value obtained based on an index of the sidelink synchronization signal block, ${N}_{SL}^{ID}$ represents a sidelink synchronization signal identifier, n^{SL-TCI} represents the first SL TCI identifier, and n^{SL-TCI} is a natural number.

Obtaining i̅_{S-SSB} based on the index of the sidelink synchronization signal block satisfies: i̅_{S-SSB} = i_{S-SSB} mod 2^{U}. i_{S-SSB} represents the index of the sidelink synchronization signal block, U is an integer greater than or equal to 0, and mod represents a modulo operation.

Optionally, the initialization parameter of the sequence of the physical sidelink broadcast channel demodulation reference signal satisfies: ${c}_{init} = {2}^{M} {N}_{SL}^{ID} + {n}^{SL - TCI}$
cᵢₙᵢₜ represents the initialization parameter of the sequence of the physical sidelink broadcast channel demodulation reference signal, M is a positive integer, ${N}_{SL}^{ID}$ represents a sidelink synchronization signal identifier, n^{SL-TCI} represents the first SL TCI identifier, and n^{SL-TCI} is a natural number.

Optionally, the first signal is a sidelink synchronization signal block, the sidelink synchronization signal block includes a physical sidelink broadcast channel, and when determining the first SL TCI identifier based on the first signal, the processing unit 1402 is specifically configured to determine the first SL TCI identifier based on an initialization parameter of a scrambling sequence of the physical sidelink broadcast channel.

Optionally, the initialization parameter of the scrambling sequence of the physical sidelink broadcast channel satisfies: ${c}_{init} = {2}^{M} {N}_{SL}^{ID} + {n}^{SL - TCI}$
cᵢₙᵢₜ represents the initialization parameter of the scrambling sequence of the physical sidelink broadcast channel, M is a positive integer, ${N}_{SL}^{ID}$ represents a sidelink synchronization signal identifier, n^{SL-TCI} represents the first SL TCI identifier, and n^{SL-TCI} is a natural number.

Optionally, the communication unit 1401 is further configured to receive first configuration information from the first terminal apparatus. The first configuration information is for configuring N^{SL-TCI} SL TCI identifiers for a second terminal apparatus, and the first SL TCI identifier belongs to the N^{SL-TCI} SL TCI identifiers.

Optionally, the first configuration information is carried in a radio resource control message of a PC5 interface, or the first configuration information is carried in a media access control control element of a PC5 interface.

Optionally, the processing unit 1402 is further configured to determine N^{SL-TCI} SL TCI identifiers based on a configuration of a receiving resource pool. N^{SL-TCI} is a positive integer greater than or equal to 1, and the first SL TCI identifier belongs to the N^{SL-TCI} SL TCI identifiers.

In embodiments of this application, division into the units is an example, is merely division into logical functions, and may be other division during actual implementation. In addition, functional units in embodiments of this application may be integrated into one processor, or each of the units may exist alone physically, or two or more units may be integrated into one unit. The integrated unit may be implemented in a form of hardware, or may be implemented in a form of a software functional unit.

It can be understood that in the foregoing embodiment, functions of the communication unit can be implemented by a transceiver, and functions of the processing unit can be implemented by a processor. The transceiver may include a transmitter and/or a receiver, to respectively implement functions of a sending unit and/or a receiving unit. Descriptions are provided below by way of example with reference to FIG. 15.

A communication apparatus 1500 shown in FIG. 15 includes at least one processor 1501. The communication apparatus 1500 may further include at least one memory 1502 configured to store program instructions and/or data. The memory 1502 is coupled to the processor 1501. The coupling in this embodiment of this application is an indirect coupling or a communication connection between apparatuses, units, or modules, may be in an electrical form, a mechanical form, or another form, and is used for information exchange between the apparatuses, the units, or the modules. The processor 1501 may perform an operation cooperatively with the memory 1502. The processor 1501 may execute the program instructions stored in the memory 1502. At least one of the at least one memory 1502 may be included in the processor 1501.

The apparatus 1500 may further include a communication interface 1503. The communication interface 1503 is configured to communicate with another device through a transmission medium, so that the communication apparatus 1500 may communicate with the another device. In this embodiment of this application, the communications interface may be a transceiver, a circuit, a bus, a module, or a communications interface of another type. In this embodiment of this application, when the communication interface is the transceiver, the transceiver may include an independent receiver and an independent transmitter, or may be a transceiver integrated with a transceiver function, or may be an interface circuit.

It should be understood that a connection medium between the processor 1501, the memory 1502, and the communication interface 1503 is not limited in this embodiment of this application. In this embodiment of this application, the memory 1502, the processor 1501, and the communication interface 1503 are connected through a communication bus 1504 in FIG. 15. The bus is represented by a thick line in FIG. 15. A connection manner between other components is merely an example for description, and is not limited. The bus may include an address bus, a data bus, a control bus, and the like. For ease of representation, in FIG. 15, only one thick line is used for representation, but it does not mean that there is only one bus, only one type of bus, or the like.

In an example, the apparatus 1500 is configured to implement the steps performed by the first terminal apparatus in the procedure shown in FIG. 7. The communication interface 1503 is configured to perform receiving and sending-related operations of the first terminal apparatus in the foregoing embodiments, and the processor 1501 is configured to perform processing-related operations of the first terminal apparatus in the foregoing method embodiments.

For example, the processor 1501 is configured to generate first indication information and a first reference signal. The communication interface 1503 is configured to send the first indication information to a second terminal apparatus, where the first indication information indicates a first sidelink transmission configuration indication SL TCI identifier of the first reference signal, and the first SL TCI identifier indicates a channel feature of a first channel for transmitting the first reference signal. The communication interface 1503 is further configured to send the first reference signal to the second terminal apparatus on the first channel.

Optionally, the first reference signal includes a physical sidelink shared channel demodulation reference signal, a physical sidelink control channel demodulation reference signal, or a sidelink channel state information reference signal, and the first indication information is carried in second-stage sidelink control information.

Optionally, the processor 1501 is further configured to determine N^{SL-TCI} SL TCI identifiers. N^{SL-TCI} is a positive integer greater than or equal to 1, and the first SL TCI identifier belongs to the N^{SL-TCI} SL TCI identifiers. The communication interface 1503 is configured to send first configuration information to the second terminal apparatus. The first configuration information is for configuring the N^{SL-TCI} SL TCI identifiers for the second terminal apparatus.

Optionally, when determining the N^{SL-TCI} SL TCI identifiers, the processor 1501 is specifically configured to determine the N^{SL-TCI} SL TCI identifiers based on a quantity of panels, transmission beams, or antennas of a first terminal apparatus.

Optionally, the first configuration information is carried in a radio resource control message of a PC5 interface, or the first configuration information is carried in a media access control control element of a PC5 interface.

Optionally, the processor 1501 is further configured to determine N^{SL-TCI} SL TCI identifiers based on configuration information of a sending resource pool. N^{SL-TCI} is a positive integer greater than or equal to 1, and the first SL TCI identifier belongs to the N^{SL-TCI} SL TCI identifiers.

For example, the communication interface 1503 is configured to receive first indication information from a first terminal apparatus. The first indication information indicates a first sidelink transmission configuration indication SL TCI identifier of a first reference signal, and the first SL TCI identifier indicates a channel feature of a first channel for transmitting the first reference signal. The communication interface 1503 is further configured to receive the first reference signal from the first terminal apparatus on the first channel. The processor 1501 is configured to process the first indication information and the first reference signal.

Optionally, the first reference signal includes a physical sidelink shared channel demodulation reference signal, a physical sidelink control channel demodulation reference signal, or a sidelink channel state information reference signal, and the first indication information is carried in second-stage sidelink control information.

Optionally, the communication interface 1503 is further configured to receive first configuration information from the first terminal apparatus. The first configuration information is for configuring N^{SL-TCI} SL TCI identifiers for a second terminal apparatus, and the first SL TCI identifier belongs to the N^{SL-TCI} SL TCI identifiers. The processor 1501 is configured to determine the N^{SL-TCI} SL TCI identifiers based on the first configuration information.

Optionally, the first configuration information is carried in a radio resource control message of a PC5 interface, or the first configuration information is carried in a media access control control element of a PC5 interface.

Optionally, the processor 1501 is further configured to determine N^{SL-TCI} SL TCI identifiers based on configuration information of a receiving resource pool. N^{SL-TCI} is a positive integer greater than or equal to 1, and the first SL TCI identifier belongs to the N^{SL-TCI} SL TCI identifiers.

In an example, the apparatus 1500 is configured to implement the steps performed by the second terminal apparatus in the procedure shown in FIG. 7. The communication interface 1503 is configured to perform receiving and sending-related operations of the second terminal apparatus in the foregoing embodiments, and the processor 1501 is configured to perform processing-related operations of the second terminal apparatus in the foregoing method embodiments.

For example, the communication interface 1503 is configured to receive first indication information from a first terminal apparatus. The first indication information indicates a first sidelink transmission configuration indication SL TCI identifier of a first reference signal, and the first SL TCI identifier indicates a channel feature of a first channel for transmitting the first reference signal. The communication interface 1503 is further configured to receive the first reference signal from the first terminal apparatus on the first channel. The processor 1501 is configured to process the first indication information and the first reference signal.

Optionally, the first reference signal includes a physical sidelink shared channel demodulation reference signal, a physical sidelink control channel demodulation reference signal, or a sidelink channel state information reference signal, and the first indication information is carried in second-stage sidelink control information.

Optionally, the communication interface 1503 is further configured to receive first configuration information from the first terminal apparatus. The first configuration information is for configuring N^{SL-TCI} SL TCI identifiers for a second terminal apparatus, and the first SL TCI identifier belongs to the N^{SL-TCI} SL TCI identifiers. The processor 1501 is configured to determine the N^{SL-TCI} SL TCI identifiers based on the first configuration information.

Optionally, the first configuration information is carried in a radio resource control message of a PC5 interface, or the first configuration information is carried in a media access control control element of a PC5 interface.

Optionally, the processor 1501 is further configured to determine N^{SL-TCI} SL TCI identifiers based on configuration information of a receiving resource pool. N^{SL-TCI} is a positive integer greater than or equal to 1, and the first SL TCI identifier belongs to the N^{SL-TCI} SL TCI identifiers.

In an example, the apparatus 1500 is configured to implement the steps performed by the first terminal apparatus in the procedure shown in FIG. 8. The communication interface 1503 is configured to perform receiving and sending-related operations of the first terminal apparatus in the foregoing embodiments, and the processor 1501 is configured to perform processing-related operations of the first terminal apparatus in the foregoing method embodiments.

For example, the processor 1501 is configured to determine a first sidelink transmission configuration indication SL TCI identifier of a first signal. The first SL TCI identifier indicates a channel feature of a first channel for transmitting the first signal. The processor 1501 is further configured to determine the first signal based on the first SL TCI identifier. The communication interface 1503 is configured to send the first signal to a second terminal apparatus on the first channel.

Optionally, the first signal is a sidelink synchronization signal block, the sidelink synchronization signal block includes a physical sidelink broadcast channel demodulation reference signal, and an initialization parameter of a sequence of the physical sidelink broadcast channel demodulation reference signal is determined based on the first SL TCI identifier.

Optionally, the initialization parameter of the sequence of the physical sidelink broadcast channel demodulation reference signal satisfies: ${c}_{init} = {2}^{11} \left({\overline{i}}_{S - SSB}+1\right) \left({N}_{SL}^{ID}+1\right) + {2}^{6} \left({\overline{i}}_{S - SSB}+1\right) + {n}^{SL - TCI}$
cᵢₙᵢₜ represents the initialization parameter of the sequence of the physical sidelink broadcast channel demodulation reference signal, i̅_{S-SSB} represents an integer value obtained based on an index of the sidelink synchronization signal block, ${N}_{SL}^{ID}$ represents a sidelink synchronization signal identifier, n^{SL-TCI} represents the first SL TCI identifier, and n^{SL-TCI} is a natural number.

Obtaining i̅_{S-SSB} based on the index of the sidelink synchronization signal block satisfies: i̅_{S-SSB} = i_{S-SSB} mod 2^{U}. i_{S-SSB} represents the index of the sidelink synchronization signal block, U is an integer greater than or equal to 0, and mod represents a modulo operation.

Optionally, the initialization parameter of the sequence of the physical sidelink broadcast channel demodulation reference signal satisfies: ${c}_{init} = {2}^{M} {N}_{SL}^{ID} + {n}^{SL - TCI}$
cᵢₙᵢₜ represents the initialization parameter of the sequence of the physical sidelink broadcast channel demodulation reference signal, M is a positive integer, ${N}_{SL}^{ID}$ represents a sidelink synchronization signal identifier, n^{SL-TCI} represents the first SL TCI identifier, and n^{SL-TCI} is a natural number.

Optionally, the first signal is a sidelink synchronization signal block, the sidelink synchronization signal block includes a physical sidelink broadcast channel, and an initialization parameter of a scrambling sequence of the physical sidelink broadcast channel is determined based on the first SL TCI identifier.

Optionally, the initialization parameter of the scrambling sequence of the physical sidelink broadcast channel satisfies: ${c}_{init} = {2}^{M} {N}_{SL}^{ID} + {n}^{SL - TCI}$
cᵢₙᵢₜ represents the initialization parameter of the scrambling sequence of the physical sidelink broadcast channel, M is a positive integer, ${N}_{SL}^{ID}$ represents a sidelink synchronization signal identifier, n^{SL-TCI} represents the first SL TCI identifier, and n^{SL-TCI} is a natural number.

Optionally, the processor 1501 is further configured to determine N^{SL-TCI} SL TCI identifiers. N^{SL-TCI} is a positive integer greater than or equal to 1, and the first SL TCI identifier belongs to the N^{SL-TCI} SL TCI identifiers. The communication interface 1503 is further configured to send first configuration information to the second terminal apparatus. The first configuration information is for configuring the N^{SL-TCI} SL TCI identifiers for the second terminal apparatus.

Optionally, when determining the N^{SL-TCI} SL TCI identifiers, the processor 1501 is specifically configured to determine the N^{SL-TCI} SL TCI identifiers based on a quantity of panels, transmission beams, or antennas of a first terminal apparatus.

Optionally, the first configuration information is carried in a radio resource control message of a PC5 interface, or the first configuration information is carried in a media access control control element of a PC5 interface.

Optionally, the processor 1501 is further configured to determine N^{SL-TCI} SL TCI identifiers based on configuration information of a sending resource pool. N^{SL-TCI} is a positive integer greater than or equal to 1, and the first SL TCI identifier belongs to the N^{SL-TCI} SL TCI identifiers.

In an example, the apparatus 1500 is configured to implement the steps performed by the second terminal apparatus in the procedure shown in FIG. 8. The communication interface 1503 is configured to perform receiving and sending-related operations of the second terminal apparatus in the foregoing embodiments, and the processor 1501 is configured to perform processing-related operations of the second terminal apparatus in the foregoing method embodiments.

For example, the communication interface 1503 is configured to receive a first signal from a first terminal apparatus on a first channel. The processor 1501 is configured to determine a first sidelink transmission configuration indication SL TCI identifier based on the first signal. The first SL TCI identifier indicates a channel feature of the first channel for transmitting the first signal.

Optionally, the first signal is a sidelink synchronization signal block, the sidelink synchronization signal block includes a physical sidelink broadcast channel demodulation reference signal. When determining the first SL TCI identifier based on the first signal, the processor 1501 is specifically configured to determine the first SL TCI identifier based on an initialization parameter of a sequence of the physical sidelink broadcast channel demodulation reference signal.

Optionally, the initialization parameter of the sequence of the physical sidelink broadcast channel demodulation reference signal satisfies: ${c}_{init} = {2}^{11} \left({\overline{i}}_{S - SSB}+1\right) \left({N}_{SL}^{ID}+1\right) + {2}^{6} \left({\overline{i}}_{S - SSB}+1\right) + {n}^{SL - TCI}$
cᵢₙᵢₜ represents the initialization parameter of the sequence of the physical sidelink broadcast channel demodulation reference signal, i̅_{S-SSB} represents an integer value obtained based on an index of the sidelink synchronization signal block, ${N}_{SL}^{ID}$ represents a sidelink synchronization signal identifier, n^{SL-TCI} represents the first SL TCI identifier, and n^{SL-TCI} is a natural number.

Obtaining i̅_{S-SSB} based on the index of the sidelink synchronization signal block satisfies: i̅_{S-SSB} = i_{S-SSB} mod 2^{U}. i_{S-SSB} represents the index of the sidelink synchronization signal block, U is an integer greater than or equal to 0, and mod represents a modulo operation.

Optionally, the initialization parameter of the sequence of the physical sidelink broadcast channel demodulation reference signal satisfies: ${c}_{init} = {2}^{M} {N}_{SL}^{ID} + {n}^{SL - TCI}$
cᵢₙᵢₜ represents the initialization parameter of the sequence of the physical sidelink broadcast channel demodulation reference signal, M is a positive integer, ${N}_{SL}^{ID}$ represents a sidelink synchronization signal identifier, n^{SL-TCI} represents the first SL TCI identifier, and n^{SL-TCI} is a natural number.

Optionally, the first signal is a sidelink synchronization signal block, the sidelink synchronization signal block includes a physical sidelink broadcast channel, and when determining the first SL TCI identifier based on the first signal, the processor 1501 is specifically configured to determine the first SL TCI identifier based on an initialization parameter of a scrambling sequence of the physical sidelink broadcast channel.

Optionally, the initialization parameter of the scrambling sequence of the physical sidelink broadcast channel satisfies: ${c}_{init} = {2}^{M} {N}_{SL}^{ID} + {n}^{SL - TCI}$
cᵢₙᵢₜ represents the initialization parameter of the scrambling sequence of the physical sidelink broadcast channel, M is a positive integer, ${N}_{SL}^{ID}$ represents a sidelink synchronization signal identifier, n^{SL-TCI} represents the first SL TCI identifier, and n^{SL-TCI} is a natural number.

Optionally, the communication interface 1503 is further configured to receive first configuration information from the first terminal apparatus. The first configuration information is for configuring N^{SL-TCI} SL TCI identifiers for a second terminal apparatus, and the first SL TCI identifier belongs to the N^{SL-TCI} SL TCI identifiers.

Optionally, the first configuration information is carried in a radio resource control message of a PC5 interface, or the first configuration information is carried in a media access control control element of a PC5 interface.

Optionally, the processor 1501 is further configured to determine N^{SL-TCI} SL TCI identifiers based on a configuration of a receiving resource pool. N^{SL-TCI} is a positive integer greater than or equal to 1, and the first SL TCI identifier belongs to the N^{SL-TCI} SL TCI identifiers.

Further, an embodiment of this application further provides an apparatus. The apparatus is configured to perform the methods in the foregoing method embodiments. A computer-readable storage medium is provided, including a program. When the program is executed by a processor, the methods in the foregoing method embodiments are performed. A computer program product is provided. The computer program product includes computer program code, and when the computer program code is run, a computer is enabled to perform the methods in the foregoing method embodiments. A chip is provided, including a processor. The processor is coupled to a memory. The memory is configured to store a program or instructions. When the program or the instructions is/are executed by the processor, an apparatus is enabled to perform the methods in the foregoing method embodiments.

In embodiments of this application, the processor may be a general-purpose processor, a digital signal processor, an application-specific integrated circuit, a field programmable gate array or another programmable logic device, a discrete gate or transistor logic device, or a discrete hardware component. The processor can implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

All or some of the methods in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

## Claims

1. A communication method, performed by a first terminal apparatus, the method comprising:
sending (S701) first indication information to a second terminal apparatus, wherein the first indication information indicates a first sidelink transmission configuration indication, SL TCI, identifier of a first reference signal, and the first SL. TCI identifier indicates a channel feature of a first channel for transmitting the first reference signal; and
sending (S702) the first reference signal to the second terminal apparatus on the first channel,
wherein the first reference signal comprises a physical sidelink shared channel demodulation reference signal, a physical sidelink control channel demodulation reference signal, or a sidelink channel state information reference signal, and the first indication information is carried in second-stage sidelink control information.

2. The method according to claim 1, wherein the method further comprises:
determining (S901) N^{SL-TCI} SL TCI identifiers, wherein N^{SL-TCI} is a positive integer greater than or equal to 1, and the first SL TCI identifier belongs to the N^{SL-TCI} SL TCI identifiers; and
sending (S902)) first configuration information to the second terminal apparatus, wherein the first configuration information is for configuring the N^{SL-TCI} SL TCI identifiers for the second terminal apparatus.

3. The method according to claim 2, wherein the determining N^{SL-TCI} SL TCI identifiers comprises:
determining the N^{SL-TCI} SL TCI identifiers based on a quantity of panels, transmission beams, or antennas of a first terminal apparatus.

4. A communication method, performed by a second terminal apparatus, the method comprising:
receiving (S701) first indication information from a first terminal apparatus, wherein the first indication information indicates a first sidelink transmission configuration indication, SL TCI, identifier of a first reference signal, and the first SL TCI identifier indicates a channel feature of a first channel for transmitting the first reference signal; and
receiving (S702) the first reference signal from the first terminal apparatus on the first channel,
wherein the first reference signal comprises a physical sidelink shared channel demodulation reference signal, a physical sidelink control channel demodulation reference signal, or a sidelink channel state information reference signal, and the first indication information is carried in second-stage sidelink control information.

5. The method according to claim 4, wherein the method further comprises:
receiving (S702) first configuration information from the first terminal apparatus, wherein the first configuration information is for configuring N^{SL-TCI} SL TCI identifiers for a second terminal apparatus, and the first SL TCI identifier belongs to the N^{SL-TCI} SL TCI identifiers; and
determining the N^{SL-TCI} SL TCI identifiers based on the first configuration information.

6. The method according to claim 5, wherein the first configuration information is carried in a radio resource control message of a PC5 interface, or the first configuration information is carried in a media access control control element of a PC5 interface.

7. A first terminal apparatus (1400), comprising:
a processing unit (1402), configured to generate first indication information and a first reference signal, wherein
the first indication information indicates a first sidelink transmission configuration indication, SL TCI, identifier of the first reference signal, and the first SL TCI identifier indicates a channel feature of a first channel for transmitting the first reference signal; and
a communication unit (1401), configured to send the first indication information to a second terminal apparatus, and send the first reference signal to the second terminal apparatus on the first channel,
wherein the first reference signal comprises a physical sidelink shared channel demodulation reference signal, a physical sidelink control channel demodulation reference signal, or a sidelink channel state information reference signal, and the first indication information is carried in second-stage sidelink control information.

8. The apparatus (1400) according to claim 7, wherein
the processing unit (1402) is further configured to determine N^{SL-TCI} SL TCI identifiers, wherein N^{SL-TCI} is a positive integer greater than or equal to 1, and the first SL TCI identifier belongs to the N^{SL-TCI} SL TCI identifiers;
and
the communication unit (1401) is further configured to send first configuration information to the second terminal apparatus, wherein the first configuration information is for configuring the N^{SL-TCI} SL TCI identifiers for the second terminal apparatus.

9. The apparatus (1400) according to claim 8, wherein when determining the N^{SL-TCI} SL TCI identifiers, the processing unit (1402) is specifically configured to:
determine the N^{SL-TCI} SL TCI identifiers based on a quantity of panels, transmission beams, or antennas of a first terminal apparatus.

10. A second terminal apparatus, comprising:
a communication unit, configured to receive first indication information from a first terminal apparatus, wherein the first indication information indicates a first sidelink transmission configuration indication, SL TCI, identifier of a first reference signal, and the first SL TCI identifier indicates a channel feature of a first channel for transmitting the first reference signal, wherein
the communication unit is further configured to receive the first reference signal from the first terminal apparatus on the first channel; and
a processing unit, configured to process the first indication information and the first reference signal,
wherein the first reference signal comprises a physical sidelink shared channel demodulation reference signal, a physical sidelink control channel demodulation reference signal, or a sidelink channel state information reference signal, and the first indication information is carried in second-stage sidelink control information.

11. The apparatus according to claim 10, wherein
the communication unit is further configured to receive first configuration information from the first terminal apparatus, wherein the first configuration information is for configuring N^{SL-TCI} SL TCI identifiers for a second terminal apparatus, and the first SL TCI identifier belongs to the N^{SL-TCI} SL TCI identifiers; and
the processing unit is further configured to determine the N^{SL-TCI} SL TCI identifiers based on the first configuration information.

12. The apparatus according to claim 11, wherein the first configuration information is carried in a radio resource control message of a PC5 interface, or the first configuration information is carried in a media access control control element of a PC5 interface.

## Patentansprüche

1. Kommunikationsverfahren, das durch eine erste Endgerätevorrichtung durchgeführt wird, wobei das Verfahren Folgendes umfasst:
Senden (S701) erster Angabeinformationen an eine zweite Endgerätevorrichtung, wobei die ersten Angabeinformationen eine erste Sidelink-Übertragungskonfigurationsangabe(SL TCI)-Kennung eines ersten Referenzsignals angeben und die erste SL TCI-Kennung ein Kanalmerkmal eines ersten Kanals zum Übertragen des ersten Referenzsignals angibt; und
Senden (S702) des ersten Referenzsignals an die zweite Endgerätevorrichtung auf dem ersten Kanal,
wobei das erste Referenzsignal ein Demodulationsreferenzsignal eines gemeinsam genutzten physischen Sidelink-Kanals, ein Demodulationsreferenzsignal eines physischen Sidelink-Steuerkanals oder ein Referenzsignal für Sidelink-Kanalzustandsinformationen umfasst und die ersten Angabeinformationen in Sidelink-Steuerinformationen einer zweiten Stufe enthalten sind.

2. Verfahren nach Anspruch 1, wobei das Verfahren ferner Folgendes umfasst:
Bestimmen (S901) von N^{SL-TCI} SL TCI-Kennungen, wobei N^{SL-TCI} eine positive ganze Zahl größer oder gleich 1 ist und die erste SL TCI-Kennung zu den N^{SL-TCI} SL TCI-Kennungen gehört; und
Senden (S902) erster Konfigurationsinformationen an die zweite Endgerätevorrichtung, wobei die ersten Konfigurationsinformationen zum Konfigurieren der N^{SL-TCI} SL TCI-Kennungen für die zweite Endgerätevorrichtung sind.

3. Verfahren nach Anspruch 2, wobei das Bestimmen von N ^{SL-TCI} SL TCI-Kennungen Folgendes umfasst:
Bestimmen der N^{SL-TCI} SL TCI-Kennungen basierend auf einer Anzahl von Panels, Übertragungsstrahlen oder Antennen einer ersten Endgerätevorrichtung.

4. Kommunikationsverfahren, das durch eine zweite Endgerätevorrichtung durchgeführt wird, wobei das Verfahren Folgendes umfasst:
Empfangen (S701) erster Angabeinformationen von einer ersten Endgerätevorrichtung, wobei die ersten Angabeinformationen eine erste Sidelink-Übertragungskonfigurationsangabe(SL TCI)-Kennung eines ersten Referenzsignals angeben und die erste SL TCI-Kennung ein Kanalmerkmal eines ersten Kanals zum Übertragen des ersten Referenzsignals angibt; und
Empfangen (S702) des ersten Referenzsignals von der ersten Endgerätevorrichtung auf dem ersten Kanal,
wobei das erste Referenzsignal ein Demodulationsreferenzsignal eines gemeinsam genutzten physischen Sidelink-Kanals, ein Demodulationsreferenzsignal eines physischen Sidelink-Steuerkanals oder ein Referenzsignal für Sidelink-Kanalzustandsinformationen umfasst und die ersten Angabeinformationen in Sidelink-Steuerinformationen einer zweiten Stufe enthalten sind.

5. Verfahren nach Anspruch 4, wobei das Verfahren ferner Folgendes umfasst:
Empfangen (S702) erster Konfigurationsinformationen von der ersten Endgerätevorrichtung, wobei die ersten Konfigurationsinformationen zum Konfigurieren von N^{SL-TCI} SL TCI-Kennungen für eine zweite Endgerätevorrichtung sind und die erste SL TCI-Kennung zu den N^{SL-TCI} SL TCI-Kennungen gehört; und
Bestimmen der N^{SL-TCI} SL TCI-Kennungen basierend auf den ersten Konfigurationsinformationen.

6. Verfahren nach Anspruch 5, wobei die ersten Konfigurationsinformationen in einer Funkressourcensteuerungsnachricht einer PC5-Schnittstelle enthalten sind oder die ersten Konfigurationsinformationen in einem Medienzugriffssteuerungssteuerungselement einer PC5-Schnittstelle enthalten sind.

7. Erste Endgerätevorrichtung (1400), umfassend:
eine Verarbeitungseinheit (1402), die dazu konfiguriert ist, erste Angabeinformationen und ein erstes Referenzsignal zu generieren, wobei
die ersten Angabeinformationen eine erste Sidelink-Übertragungskonfigurationsangabe(SL TCI)-Kennung des ersten Referenzsignals angeben und die erste SL TCI-Kennung ein Kanalmerkmal eines ersten Kanals zum Übertragen des ersten Referenzsignals angibt; und
eine Kommunikationseinheit (1401), die dazu konfiguriert ist, die ersten Angabeinformationen an eine zweite Endgerätevorrichtung zu senden und das erste Referenzsignal an die zweite Endgerätevorrichtung auf dem ersten Kanal zu senden, wobei das erste Referenzsignal ein Demodulationsreferenzsignal eines gemeinsam genutzten physischen Sidelink-Kanals, ein Demodulationsreferenzsignal eines physischen Sidelink-Steuerkanals oder ein Referenzsignal für Sidelink-Kanalzustandsinformationen umfasst und die ersten Angabeinformationen in Sidelink-Steuerinformationen einer zweiten Stufe enthalten sind.

8. Vorrichtung (1400) nach Anspruch 7, wobei
die Verarbeitungseinheit (1402) ferner dazu konfiguriert ist, N^{SL-TCI} SL TCI-Kennungen zu bestimmen, wobei N^{SL-TCI} eine positive ganze Zahl größer oder gleich 1 ist und die erste SL TCI-Kennung zu den N^{SL-TCI} SL TCI-Kennungen gehört; und
die Kommunikationseinheit (1401) ferner dazu konfiguriert ist, erste Konfigurationsinformationen an die zweite Endgerätevorrichtung zu senden, wobei die ersten Konfigurationsinformationen zum Konfigurieren der N^{SL-TCI} SL TCI-Kennungen für die zweite Endgerätevorrichtung sind.

9. Vorrichtung (1400) nach Anspruch 8, wobei die Verarbeitungseinheit (1402), wenn sie die N^{SL-TCI} SL TCI-Kennungen bestimmt, insbesondere zu Folgendem konfiguriert ist:
Bestimmen der N^{SL-TCI} SL TCI-Kennungen basierend auf einer Anzahl von Panels, Übertragungsstrahlen oder Antennen einer ersten Endgerätevorrichtung.

10. Zweite Endgerätevorrichtung, umfassend:
eine Kommunikationseinheit, die dazu konfiguriert ist, erste Angabeinformationen von einer ersten Endgerätevorrichtung zu empfangen, wobei die ersten Angabeinformationen eine erste Sidelink-Übertragungskonfigurationsangabe(SL TCI)-Kennung eines ersten Referenzsignals angeben und die erste SL TCI-Kennung ein Kanalmerkmal eines ersten Kanals zum Übertragen des ersten Referenzsignals angibt, wobei
die Kommunikationseinheit ferner dazu konfiguriert ist, das erste Referenzsignal von der ersten Endgerätevorrichtung auf dem ersten Kanal zu empfangen; und
eine Verarbeitungseinheit, die dazu konfiguriert ist, die ersten Angabeinformationen und das erste Referenzsignal zu verarbeiten, wobei das erste Referenzsignal ein Demodulationsreferenzsignal eines gemeinsam genutzten physischen Sidelink-Kanals, ein Demodulationsreferenzsignal eines physischen Sidelink-Steuerkanals oder ein Referenzsignal für Sidelink-Kanalzustandsinformationen umfasst und die ersten Angabeinformationen in Sidelink-Steuerinformationen einer zweiten Stufe enthalten sind.

11. Vorrichtung nach Anspruch 10, wobei
die Kommunikationseinheit ferner dazu konfiguriert ist, erste Konfigurationsinformationen von der ersten Endgerätevorrichtung zu empfangen, wobei die ersten Konfigurationsinformationen zum Konfigurieren von N^{SL-TCI} SL TCI-Kennungen für eine zweite Endgerätevorrichtung sind und die erste SL TCI-Kennung zu den N^{SL-TCI} SL TCI-Kennungen gehört; und
die Verarbeitungseinheit ferner dazu konfiguriert ist, die N^{SL-TCI} SL TCI-Kennungen basierend auf den ersten Konfigurationsinformationen zu bestimmen.

12. Vorrichtung nach Anspruch 11, wobei die ersten Konfigurationsinformationen in einer Funkressourcensteuerungsnachricht einer PC5-Schnittstelle enthalten sind oder die ersten Konfigurationsinformationen in einem Medienzugriffssteuerungssteuerungselement einer PC5-Schnittstelle enthalten sind.

## Revendications

1. Procédé de communication, réalisé par un premier appareil terminal, le procédé comprenant :
l'envoi (S701) de premières informations d'indication à un second appareil terminal, dans lequel les premières informations d'indication indiquent un premier identifiant d'indication de configuration de transmission de liaison latérale, SL TCI, d'un premier signal de référence, et le premier identifiant SL TCI indique une caractéristique de canal d'un premier canal pour la transmission du premier signal de référence ; et
l'envoi (S702) du premier signal de référence au second appareil terminal sur le premier canal,
dans lequel le premier signal de référence comprend un signal de référence de démodulation de canal partagé de liaison latérale physique, un signal de référence de démodulation de canal de commande de liaison latérale physique ou un signal de référence d'information d'état de canal de liaison latérale, et les premières informations d'indication sont transportées dans des informations de commande de liaison latérale de second niveau.

2. Procédé selon la revendication 1, dans lequel le procédé comprend en outre :
la détermination (S901) de N^{SL-TCI} identifiants SL TCI, dans lequel N^{SL-TCI} est un entier positif supérieur ou égal à 1, et le premier identifiant SL TCI appartient aux N^{SL-TCI} identifiants SL TCI ; et
l'envoi (S902)) de premières informations de configuration au second appareil terminal, dans lequel les premières informations de configuration servent à configurer les N^{SL-TCI} identifiants SL TCI pour le second appareil terminal.

3. Procédé selon la revendication 2, dans lequel la détermination des N^{SL-TCI} identifiants SL TCI comprend :
la détermination des N^{SL-TCI} identifiants SL TCI en fonction d'une quantité de panneaux, de faisceaux de transmission ou d'antennes d'un premier appareil terminal.

4. Procédé de communication, réalisé par un second appareil terminal, le procédé comprenant :
la réception (S701) de premières informations d'indication provenant d'un premier appareil terminal, dans lequel les premières informations d'indication indiquent un premier identifiant d'indication de configuration de transmission de liaison latérale, SL TCI, d'un premier signal de référence, et le premier identifiant SL TCI indique une caractéristique de canal d'un premier canal pour la transmission du premier signal de référence ; et
la réception (S702) du premier signal de référence provenant du premier appareil terminal sur le premier canal,
dans lequel le premier signal de référence comprend un signal de référence de démodulation de canal partagé de liaison latérale physique, un signal de référence de démodulation de canal de commande de liaison latérale physique ou un signal de référence d'information d'état de canal de liaison latérale, et les premières informations d'indication sont transportées dans des informations de commande de liaison latérale de second niveau.

5. Procédé selon la revendication 4, dans lequel le procédé comprend en outre :
la réception (S702) de premières informations de configuration provenant du premier appareil terminal, dans lequel les premières informations de configuration servent à configurer N^{SL-TCI} identifiants SL TCI pour un second appareil terminal, et le premier identifiant SL TCI appartient aux N^{SL-TCI} identifiants SL TCI ; et
la détermination des N^{SL-TCI} identifiants SL TCI en fonction des premières informations de configuration.

6. Procédé selon la revendication 5, dans lequel les premières informations de configuration sont transportées dans un message de commande de ressources radio d'une interface PC5, ou les premières informations de configuration sont transportées dans un élément de commande pour la commande d'accès au support d'une interface PC5.

7. Premier appareil terminal (1400), comprenant :
une unité de traitement (1402), configurée pour générer des premières informations d'indication et un premier signal de référence, dans lequel
les premières informations d'indication indiquent un premier identifiant d'indication de configuration de transmission de liaison latérale, SL TCI, du premier signal de référence, et le premier identifiant SL TCI indique une caractéristique de canal d'un premier canal pour la transmission du premier signal de référence ; et
une unité de communication (1401), configurée pour envoyer les premières informations d'indication à un second appareil terminal, et envoyer le premier signal de référence au second appareil terminal sur le premier canal,
dans lequel le premier signal de référence comprend un signal de référence de démodulation de canal partagé de liaison latérale physique, un signal de référence de démodulation de canal de commande de liaison latérale physique ou un signal de référence d'information d'état de canal de liaison latérale, et les premières informations d'indication sont transportées dans des informations de commande de liaison latérale de second

8. Appareil (1400) selon la revendication 7, dans lequel
l'unité de traitement (1402) est en outre configurée pour déterminer N^{SL-TCI} identifiants SL TCI, dans lequel N^{SL-TCI} est un entier positif supérieur ou égal à 1, et le premier identifiant SL TCI appartient aux N^{SL-TCI} identifiants SL TCI ; et
l'unité de communication (1401) est en outre configurée pour envoyer des premières informations de configuration au second appareil terminal, dans lequel les premières informations de configuration servent à configurer les N^{SL-TCI} identifiants SL TCI pour le second appareil terminal.

9. Appareil (1400) selon la revendication 8, dans lequel lors de la détermination des N^{SL-TCI} identifiants SL TCI, l'unité de traitement (1402) est spécifiquement configurée pour :
déterminer les N^{SL-TCI} identifiants SL TCI en fonction d'une quantité de panneaux, de faisceaux de transmission ou d'antennes d'un premier appareil terminal.

10. Second appareil terminal, comprenant :
une unité de communication, configurée pour recevoir des premières informations d'indication provenant d'un premier appareil terminal, dans lequel les premières informations d'indication indiquent un premier identifiant d'indication de configuration de transmission de liaison latérale, SL TCI, d'un premier signal de référence, et le premier identifiant SL TCI indique une caractéristique de canal d'un premier canal pour la transmission du premier signal de référence, dans lequel
l'unité de communication est en outre configurée pour recevoir le premier signal de référence provenant du premier appareil terminal sur le premier canal ; et
une unité de traitement, configurée pour traiter les premières informations d'indication et le premier signal de référence,
dans lequel le premier signal de référence comprend un signal de référence de démodulation de canal partagé de liaison latérale physique, un signal de référence de démodulation de canal de commande de liaison latérale physique ou un signal de référence d'information d'état de canal de liaison latérale, et les premières informations d'indication sont transportées dans des informations de commande de liaison latérale de second niveau.

11. Appareil selon la revendication 10, dans lequel
l'unité de communication est en outre configurée pour recevoir des premières informations de configuration provenant du premier appareil terminal, dans lequel les premières informations de configuration servent à configurer N^{SL-TCI} identifiants SL TCI pour un second appareil terminal, et le premier identifiant SL TCI appartient aux N^{SL-TCI} identifiants SL TCI ; et
l'unité de traitement est en outre configurée pour déterminer les N^{SL-TCI} identifiants SL TCI en fonction des premières informations de configuration.

12. Appareil selon la revendication 11, dans lequel les premières informations de configuration sont transportées dans un message de commande de ressources radio d'une interface PC5, ou les premières informations de configuration sont transportées dans un élément de commande pour la commande d'accès au support d'une interface PC5.
